(19)

**Europäisches Patentamt**
**European Patent Office**
**Office européen des brevets**

(11) **EP 4 184 448 A1**

(12) # EUROPEAN PATENT APPLICATION

(43) Date of publication:
**24.05.2023 Bulletin 2023/21**

(21) Application number: **22173223.3**

(22) Date of filing: **13.05.2022**

(51) International Patent Classification (IPC):
**G06V 10/52** (2022.01)    **G06V 10/56** (2022.01)
**G06V 10/58** (2022.01)    **G06V 10/80** (2022.01)
**G06V 10/82** (2022.01)

(52) Cooperative Patent Classification (CPC):
**G06V 10/56; G06V 10/52; G06V 10/58;**
**G06V 10/806; G06V 10/82**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.11.2021 CO 21015534**

(71) Applicant: **Hochschild Mining Holdings Limited**
**London**
**W1G 0PH (GB)**

(72) Inventors:
- **BARTON MARTINELLI, Augusto Enrique**
 **15023 Lima (PE)**
- **MURRAY HERRERA, Victor Manuel**
 **15022 Lima (PE)**
- **SHATWELL PITTALUGA, David George**
 **15039 Lima (PE)**

(74) Representative: **ABG Intellectual Property Law,**
**S.L.**
**Avenida de Burgos, 16D**
**Edificio Euromor**
**28036 Madrid (ES)**

(54) **METHOD AND SYSTEM FOR THE AUTOMATIC CLASSIFICATION OF ROCKS ACCORDING TO THEIR MINERALS**

(57) The present disclosure refers to methods and system for classifying rocks according to their minerals from the processing of color images and hyperspectral images. The methods and systems of this disclosure achieve an efficient and low-cost classification of rocks with minerals. In particular, the method uses classification methods that take color images and hyperspectral images and give as a result a probability that the rock or rocks present in said images are suitable or waste.

EP 4 184 448 A1

**Description**

**TECHNICAL FIELD**

The present disclosure relates to methods and systems for classifying rocks according to their minerals from images. In particular, the present disclosure relates to methods and systems for classifying excavated rocks according to their minerals based on information about the texture, color and hyperspectral properties of rock images.

**DESCRIPTION OF THE PRIOR ART**

The present disclosure refers to devices and systems that allow rocks to be classified according to their minerals obtained, e.g., from excavation. The profitability of exploiting a mineral deposit is determined by its grade. Long-term trends show that mineral grades in different regions of the world have decreased over the years. As high-grade deposits are depleted, mining companies have begun mining low-grade deposits. Such deposits require greater amounts of water, energy, and reagents than high-grade deposits to extract the same mineral amount, which has a significant impact on processing costs. In order to solve this problem, several technologies have been developed to optimize the extraction and processing of minerals, making the exploitation of low-grade deposits profitable.

Usually, the mineral extraction process consists of several stages that form a chain of operations, which are mining, crushing, grinding, concentration and recovery. Sensorbased mineral classification is a pre-concentration technology that is typically used between crushing and grinding processes to separate rocks that contain a significant amount of valuable material (material) from waste rocks (waste). The goal of this technology is to reduce the amount of material entering the processing plant without significantly affecting mineral recovery.

The mineral classification process has three stages: detection, data processing and classification. One or more sensors are used to measure the physical properties of the rock, such as density, color, light scattering, and reflection of near-infrared radiation (NIR), which are measured by X-ray machines, cameras in color, lasers and NIR cameras, respectively. The information collected with the sensors is sent to a processor that identifies the different types of minerals present in the rock and decides whether it should be sent to the processing plant or to the waste heap. Finally, a mechanical system is used to separate the rocks into different compartments based on decision making in the processing stage.

In many mines, target minerals are dispersed in minute concentrations within a matrix of other less valuable minerals. In these cases, the sensors used in traditional mineral classification cannot directly detect the target mineral. Commercial mineral classification machines are used to identify other minerals and alterations that correlate to the target mineral grade.

However, these machines use algorithms based on simple thresholds that cannot classify different minerals with similar physical features with high precision. Therefore, the use of traditional mineral classification is not economically feasible in such cases.

Therefore, there is a need to have systems and methods that allow a classification of similar rocks according to their minerals with high precision and that is economically viable.

Disclosures are identified in the prior art, which are related to methods and systems that classify rocks from information obtained with images.

For example, document CN104463199A discloses a method for classifying the size of rock fragments based on multiple features and segmentation rectification.

The method of document CN104463199A includes a first stage that generates fragments of a rock image by cutting said rock image into 64 by 43 fragments, and a second stage that extracts color features from fragments of the rock image by dimensional reduction of RGB color features with a Principal Component Analysis (PCA).

Moreover, this document mentions that the method includes a third stage, which extracts texture features through an analytical process of wavelet decomposition. Document D1 mentions that the method can extract up to 24 textural features.

Similarly, the method includes a fourth stage that selects features from the group of color features and texture features by intrinsic dimensionality reduction, which includes a principal component analysis (PCA).

Moreover, the method disclosed in this document includes a fifth stage that classifies the rock image fragments by means of a support vector machine (SVM). On the other hand, this document states that the method processes 3120 rock image fragments as a training set and 2000 rock image fragments as a test set. Also, this document indicates that the support vector machine can identify mineral deposits of multiple kinds present in the rock.

In addition, the method disclosed in said document includes a sixth stage that segments the original image of the rock, which may include maximum entropy methods (MEM), filling of holes in the image, range conversion, among others. Finally, the method disclosed in this document obtains a final classification result by correcting the segmentation results of the original image. Finally, the document indicates that said stage improves the performance of the classification.

On the other hand, US20140297186A1 discloses a method for rock classification based on texture and composition attributes. Moreover, US20140297186A1 indicates that the method is executed in a processor-based system that may include a memory, an input device and an output device.

The method disclosed in this document includes a first stage that classifies a rock according to composition measurements, and a second stage that classifies the rock based on texture and composition measurements, simultaneously. Both classification stages include the execution of an HRA algorithm facilitating the classification of rocks through multivariate cluster analysis.

Document US20140297186A1 mentions that the HRA algorithm performs a principal component analysis, which minimizes the redundancy of the measurements and defines a subset of principal component measurements carrying the maximum variability of the set of measurements.

Similarly, this document states that the measurement data is obtained from underground measurements on the rock. For simultaneous classification of texture and composition, the method obtains measurements using measurement techniques that can include wave velocity, thermal conductivity, unconfined compressive strength of the rock, and resistivity. On the other hand, for composition-only classification, the method obtains measurements using measurement techniques that may include XRD mineralogy, X-ray fluorescence (XRF) mineralogy, component gamma rays, photoelectric logging, and mineralogy logging.

In addition, this document discloses that the method compares the results of both classifications to extract data related to texture and composition, and obtains combinations of texture and composition that define the heterogeneity of a geological system. Said document also indicates that the method, after defining the heterogeneity of a geological system, can determine the measurements necessary to identify the combinations of texture and composition in other geological systems.

On the other hand, US8233667B2 discloses an apparatus and a method for analyzing the composition of mineral and rock particles.

The method and apparatus disclosed in US8233667B2 allow the size and shape of objects to be determined. This document discloses that the objects may be selected from the group comprising minerals, rocks, gravel, natural, manufactured or recycled aggregates and the like. Also, this document discloses that the shape of the object includes at least one parameter or class of shape that indicates whether the particles are elongated and/or flat and an angularity determination.

Similarly, US8233667B2 indicates that for the comparison of the absorbance spectra with the reference values, statistical methods can be used that use statistical classifiers or neural networks.

Finally, the non-patent document Natsuo Okada et al ("Automated Identification of Mineral Types and Grain Size Using Hyperspectral Imaging and Deep Learning for Mineral Processing. " Minerals 2020, 10(9), 809, SEP 2020) discloses a non-invasive method that automatically identifies types of minerals present in a rock using deep learning techniques applied to hyperspectral images of the rock.

Moreover, this document mentions that hyperspectral images are captured by means of a hyperspectral camera capable of dividing the wavelength of light from 400 nm to 1000 nm or meters into 204 wavelength bands. P1 also indicates that the hyperspectral camera can capture RGB images. Additionally, P1 discloses a setup of three halogen lights pointed at the rock from different angles alongside the hyperspectral camera.

On the other hand, this document discloses the implementation of a convolutional neural network (CNN) capable of extracting features from mineral spectrum data. Moreover, it is mentioned that the CNN automatically recognizes, extracts, and learns the spectral forms that are considered typical of a mineral. Furthermore, it is stated that the spectral shapes may be selected from the group comprising intensity, slope and peak of light reflection.

Also, this paper presents a comparison between mineral detection in RGB images and mineral detection in hyperspectral images. To do this, P1 discloses the implementation of two convolutional neural networks (CNN) for each type of detection.

Similarly, this document indicates that the CNN for RGB images adopts transfer learning using GoogLeNet with a previous training of 22 layers and 1000 images. In addition, it is pointed out that for the hyperspectral CNN, a neural network is built that includes a convolution layer, a normalization layer, a pooling layer and a softmax layer, which did not include a previous training.

Finally, this document discloses that the identification of minerals present in a rock by means of a neural network that convolves hyperspectral images reaches 90% accuracy in said identification, while the identification of minerals present in a rock by means of a neural network that convolves RGB images reaches an accuracy of about 30%.

However, the prior art does not disclose methods and systems that allow a classification of similar rocks according to their minerals with high precision and that is economically viable.

**BRIEF DESCRIPTION**

The present disclosure refers to a method for classifying rocks according to their minerals, which comprises a stage a) of receiving in a computing unit a color image and a hyperspectral image of at least one rock from at least one image acquisition device. Then, the method in a stage b) obtains by means of the computing unit a first matrix by processing the color image by means of a first classification method. Specifically, the first matrix is a distribution matrix of the mineral present in at least one rock according to the color and texture of the color image of said rock.

Additionally, stage b) comprises the following sub-stages: b1) obtaining at least one-color data by processing the color image through a color feature analysis process in the computing unit, b2) obtaining at least one texture data by processing the color image by a process of texture feature analysis in the computing unit; and b3) obtaining the first matrix by processing the at least one-color data and the at least one texture data by means of the first classification method in the computing unit.

Then, in stage c), a second matrix is obtained by the computing unit by processing the hyperspectral image by means of a second classification method. In particular, the second matrix is a distribution matrix of the mineral present in at least one rock according to the spectral features of the hyperspectral image of said rock.

Specifically, stage c) comprises the following sub-stages: c1) obtaining a plurality of spectral curves by processing the hyperspectral image; and c2) obtaining the second matrix by processing the plurality of spectral curves by means of the second classification method in the computing unit.

Finally, in a stage d) the method obtains rock classification data by processing the first matrix and the second matrix by means of a third classification method in the computing unit.

**BRIEF DESCRIPTION OF THE FIGURES**

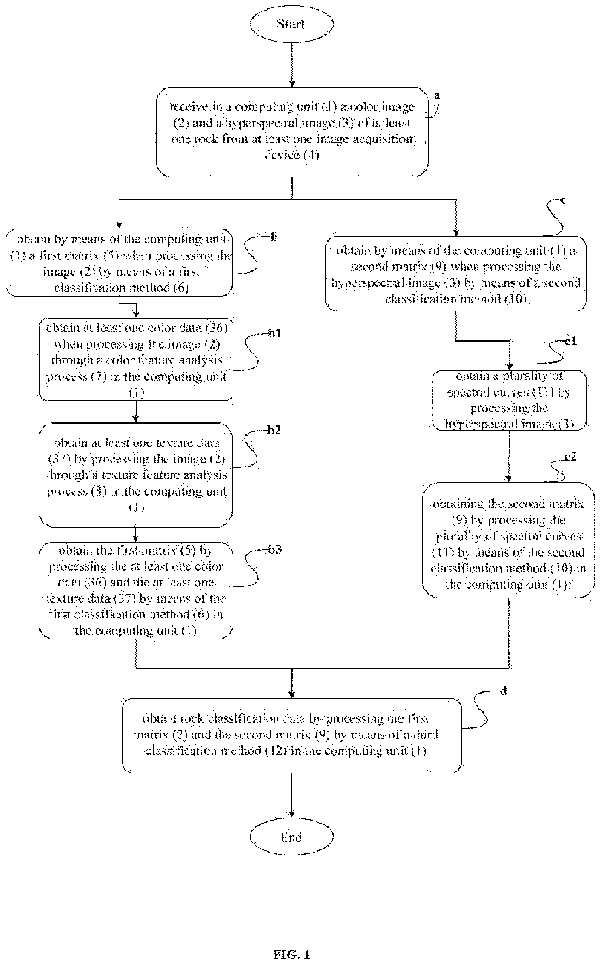

FIG. 1 shows a flow diagram of one embodiment of the rock classification method according to their minerals.

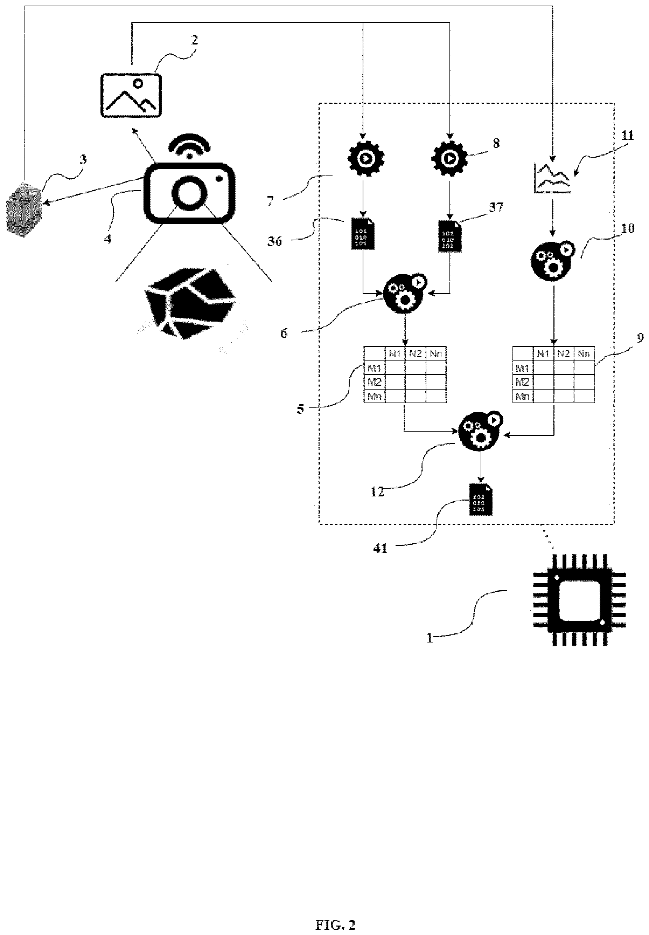

FIG. 2 shows a block diagram of an embodiment of the rock classification method according to its minerals, where a color image and a hyperspectral image are processed, where the block diagram illustrates data and processes obtained and executed between stages a) d) of said embodiment of the method.

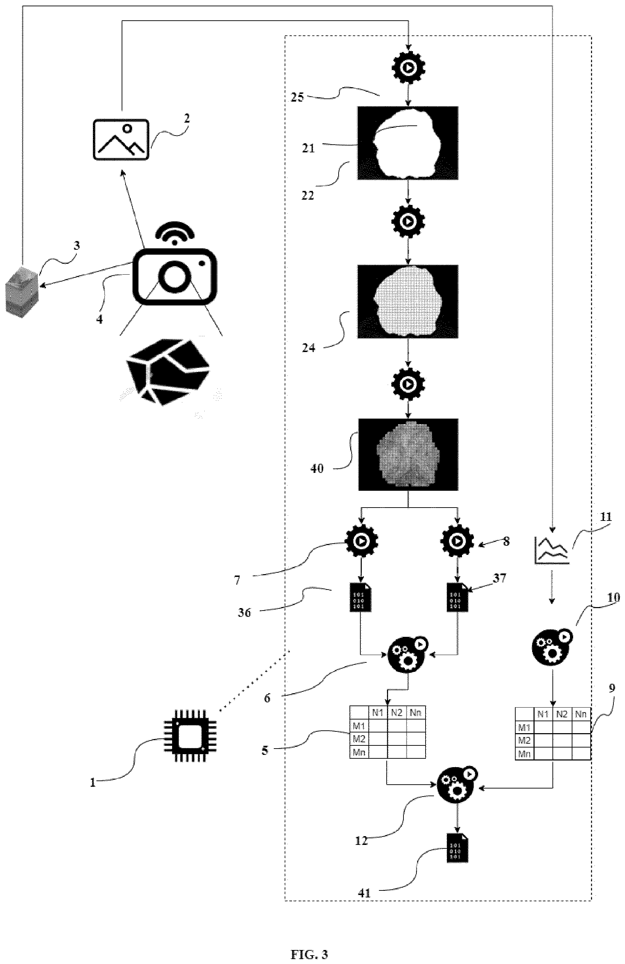

FIG. 3 shows a block diagram of an embodiment of the rock classification method according to their minerals, where a color image and a hyperspectral image are processed, where the block diagram illustrates data and processes obtained and executed between stages a) to d) of said embodiment of the method. In particular, this figure shows a pre-processing performed on the color image.

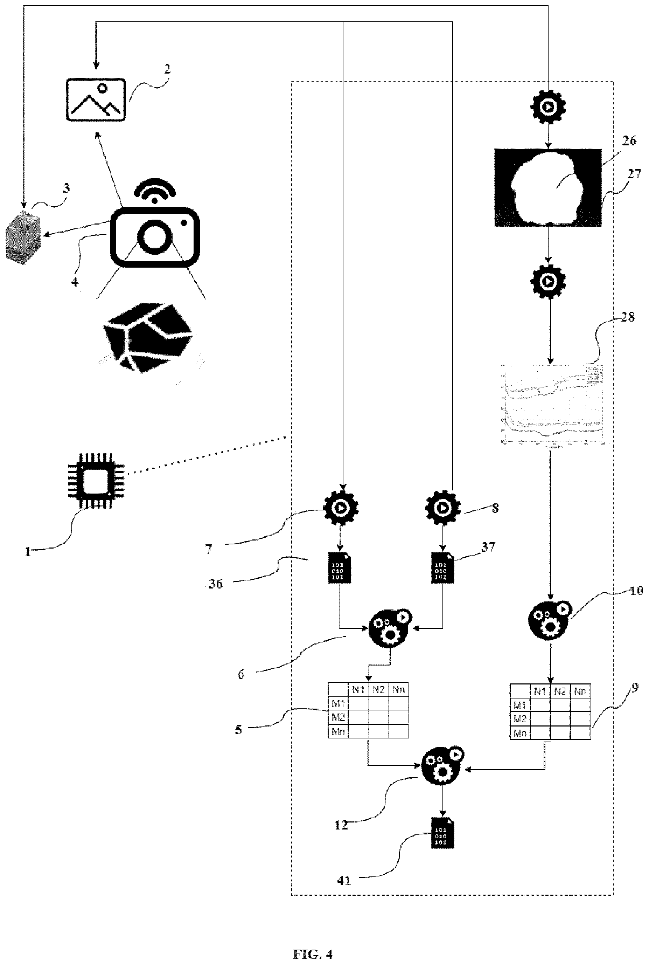

FIG. 4 shows a block diagram of an embodiment of the rock classification method according to its minerals, where a color image and a hyperspectral image are processed, where the block diagram illustrates data and processes obtained and executed between stages a) to d) of said embodiment of the method. In particular, this figure shows a pre-processing performed on the hyperspectral image.

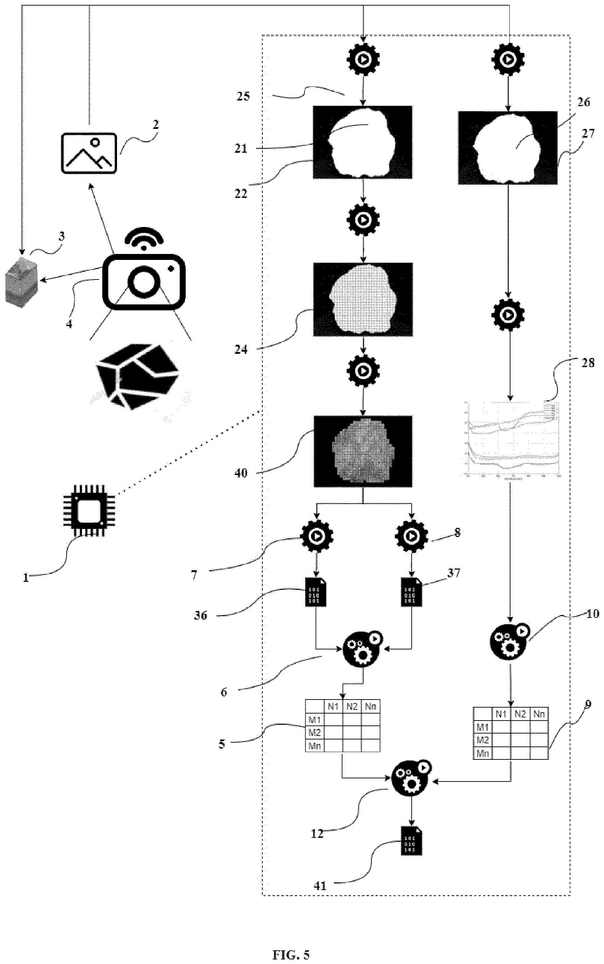

FIG. 5 shows a block diagram of an embodiment of the rock classification method according to their minerals, where a color image and a hyperspectral image are processed, where the block diagram illustrates data and processes obtained and executed between stages a) to d) of said embodiment of the method. Particularly, this figure shows a pre-processing that is performed on the color image and a pre-processing that is performed on the hyperspectral image.

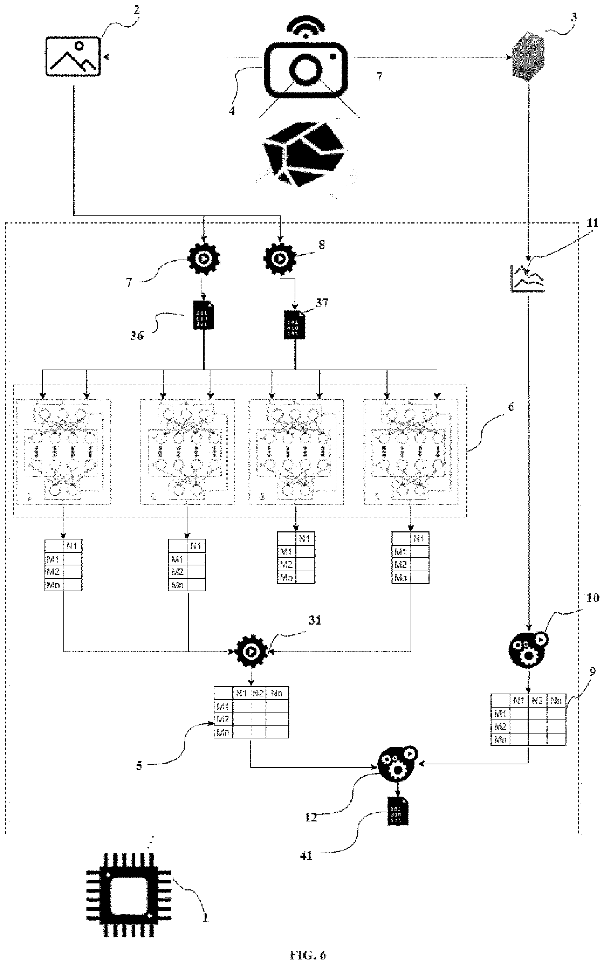

FIG. 6 shows a block diagram of an embodiment of the rock classification method according to their minerals, where a color image and a hyperspectral image are processed, where the block diagram illustrates data and processes obtained and executed between stages a) to d) of said embodiment of the method. In particular, this figure shows that the method uses parallel neural networks to process information obtained from the color image.

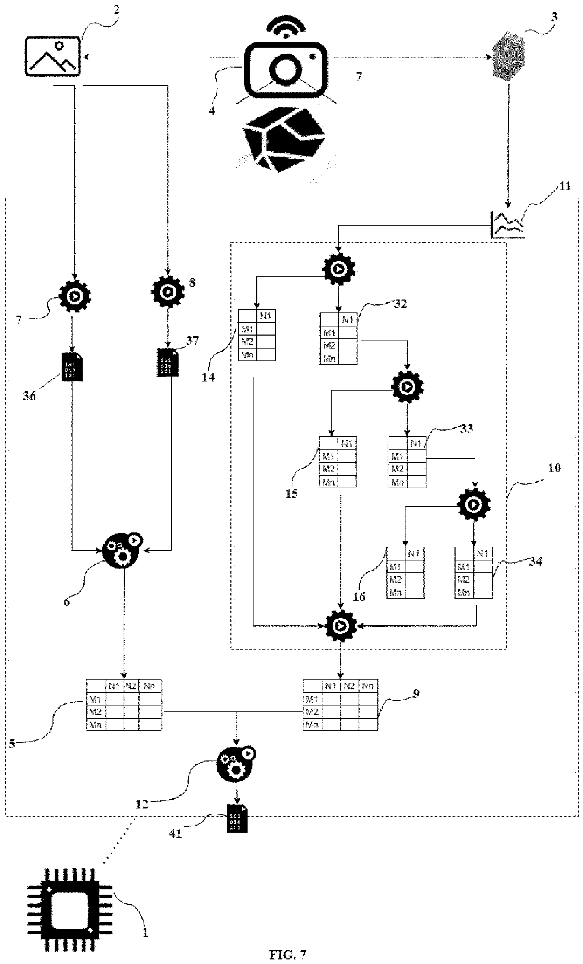

FIG. 7 shows a block diagram of an embodiment of the rock classification method according to its minerals, where a color image and a hyperspectral image are processed, where the block diagram illustrates data and processes obtained and executed between stages a) to d) of said embodiment of the method. In particular, this figure shows that the method uses support vector machines that are configured as decision trees.

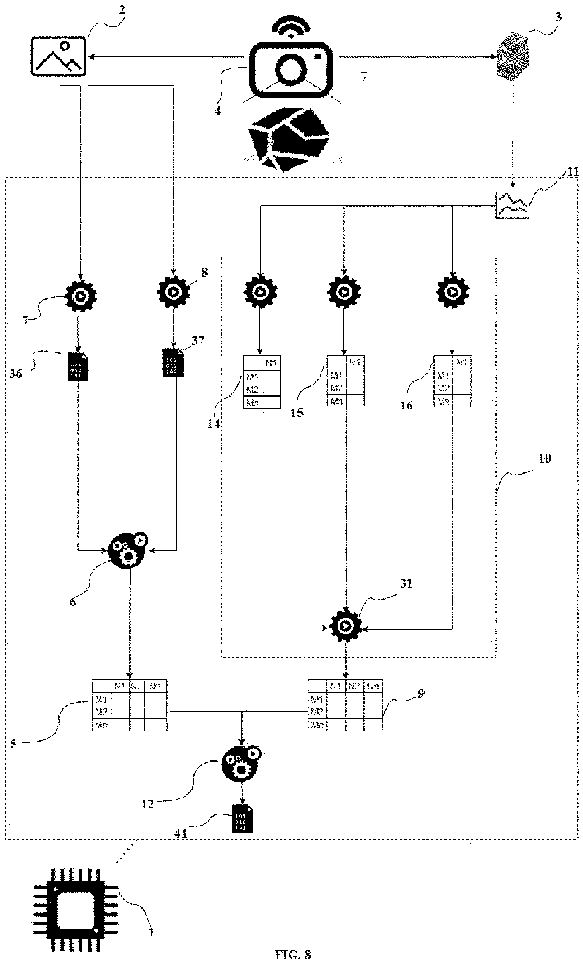

FIG. 8 shows a block diagram of an embodiment of the rock classification method according to their minerals, where a color image and a hyperspectral image are processed, where the block diagram illustrates data and processes obtained and executed between stages a) to d) of said embodiment of the method. In particular, this figure shows that the method uses parallel support vector machines to process information obtained from the hyperspectral image.

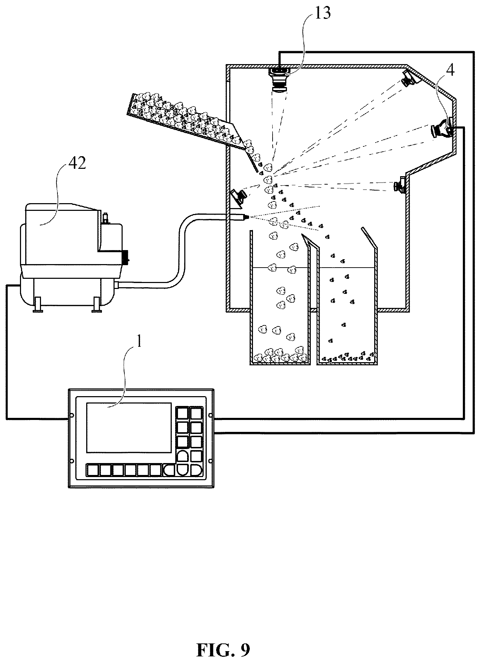

FIG. 9 shows an embodiment of a classification system according to its minerals comprising a computing unit, a first image acquisition device, a second image acquisition device and a separator mechanism.

## DETAILED DESCRIPTION

The present disclosure is directed to systems and methods for classifying rocks according to their minerals, based on the data obtained from images of the rocks to be classified. The use of image-based processing reduces the necessary processing to obtain an adequate classification of rocks according to their minerals. Particularly, in the method of this disclosure, color images and hyperspectral images are obtained, which are taken by at least one image acquisition device. The images obtained are processed in a computing unit, which executes classification processes that take color images and hyperspectral images as input data. From this image processing, mineral distribution matrices are obtained. Then, the computing unit executes a final classification process, which takes as input the mineral distribution matrices and has rock classification data as output. In general, the method of this disclosure, evaluated under an $F_1$ value metric, allows to obtain a classification performance of up to 98.9%.

Referring to FIGS. 1 and 2, in one embodiment of the disclosure, the method of classifying rocks according to their minerals, comprises:

a) receiving in a computing unit (1) an image in color (2) and a hyperspectral image (3) of at least one rock from at least one image acquisition device (4);

b) obtaining by means of the computing unit (1) a first matrix (5) by processing the color image (2) by means of a first classification method (6), where stage b) comprises the following sub-stages:

b1) obtaining at least one-color data (36) by processing the color image (2) by means of a color feature analysis process (7) in the computing unit (1);

b2) obtaining at least one texture data (37) when processing the color image (2) by means of a texture features analysis process (8) in the computing unit (1); and

b3) obtaining the first matrix (5) by processing the at least one-color data (36) and the at least one texture data (37) by means of the first classification method (6) in the computing unit (1);

where, the first matrix (5) is a distribution matrix of the mineral present in at least one rock according to the color and texture of the color image (2) of said rock;

c) obtaining by means of the computing unit (1) a second matrix (9) by processing the hyperspectral image (3) by means of a second classification method (10), where stage c) comprises the following sub-stages:

c1) obtaining a plurality of spectral curves (11) by processing the hyperspectral image (3); and

c2) obtaining the second matrix (9) by processing the plurality of spectral curves (11) by means of the second classification method (10) in the computing unit (1);

where, the second matrix (9) is a distribution matrix of the mineral present in at least one rock, according to the spectral features of the hyperspectral image (3) of said rock;

d) obtaining rock classification data (41) by processing the first matrix (2) and the second matrix (9) by means of a third classification method (12) in the computing unit (1).

Particularly, the method of this disclosure processes the first matrix (5) and the second matrix (6) together, with which it obtains the rock classification data (41) that represent if the rock is suitable or if it is considered to be waste. With the combination of the data obtained through the processing performed by the method on the color image (2) and the hyperspectral image (3), a high classification performance is achieved, with an $F_1$ value of around 98.9%.

In the present disclosure, data will be understood as a symbolic representation that can be numerical, alphabetic, algorithmic, logical, and/or vectorial, encoding information. A piece of data can have a structure or frame made up of blocks of characters or bits that represent different types of information. Each block is made up of strings of characters, numbers, logical symbols, among others.

Data can also be made up of only bits (strings in binary language), be made up of characters made up one by one by a combination of bits, be made up of fields, registers or tables made up of fields and registers, or be made up of exchange files of data (formats such as csv, json, xls, among others). Also, a data can be a matrix of n rows by m columns. In turn, a data can contain several data.

For example, when the data has a frame structure, the frame can have a block of identification characters, generally known as a "header," which contains information related to a computing device or processor that sends the data, and can contain information related to a computing device or processor that receives the data. Preferably, if data is in a frame format, the frame contains layer-related blocks according to the OSI reference model.

Also, the frame can have a block of tail characters (or simply tail), which allows to identify a computing unit or server that is the end of the data, i.e., after that block Information contained in the data previously identified by the computing unit or server with the header is no longer found. In addition, the data has between the header block and the tail block one or more blocks of characters representing statistics, numbers, descriptors, words, letters, logical values (e.g., boolean) and combinations thereof.

*Image Reception*

In any of the method embodiments that include stage a), the color image (2) and the hyperspectral image (3) can be obtained by means of at least one image acquisition device (4), the color image (2) and the hyperspectral image (3) contain at least one rock, but preferably contain a plurality of rocks. In a particular example and referring to FIG. 8, you can have an image acquisition device (4) to obtain the color image (2) and a second image acquisition device (13) to obtain the hyperspectral image. (3).

*Obtaining the First Matrix (5)*

In any of the embodiments of the method that include stage b), the first matrix (5) can be obtained from the processing of the color image (2) in the computing unit (1). In general, with the processing of the color image (2), the color data (36) and the texture data (37) can be obtained, which are then taken as input data for the first classification process (6).

The combination of the color data (36) and the texture data (37) allows an increase in the accuracy of the classification of the method of this disclosure. There are cases where you have two types of rock, one high grade and one low grade, which cannot be classified using color data alone because, on average, they have very similar color features. However, if both rock types have a different texture, at least one texture datum can be used to classify them correctly. The same happens in the reverse case, i.e., if two types of rock have a similar texture, the color data can be used to classify them correctly.

The color data (36) can be obtained by processing the color image (2) with the color features analysis process (7) in the computing unit (1). The color features analysis process (7) can extract some features from the color image (2) that allow certain features of the object found in the color image (2) to be determined, which in this case the object is at minus one rock. Said features of the color image (2) can be represented in the color data (36).

The color image (2) can be in any color space, for example RGB, HSI, YCbCr, HSV, L*a*b*, or other color spaces known to a person of ordinary skill in the art, and combinations of the foregoing. In a particular example, the color spaces used by the method are RGB and HSV. The technical effect of the first color space being RGB is that it is created directly by the color image acquisition device and therefore requires no additional processing time to create. The technical effect of the second color space being HSV is that it allows the color components to be separated into hue, saturation, and value. This representation allows obtaining color information complementary to that of the RGB space. In a particular example, the use of the RGB and HSV spaces together allows to increase the precision by 1.5% compared to the use of only the RGB color space.

With the color feature process (7) it is possible to obtain at least one descriptive feature that is represented in the color data (36). In order to facilitate the processing of the color data (36) to later obtain the first matrix (5), only some of the descriptive features that are obtained from the color feature process (7) can be selected. The descriptive features will depend on the color feature process (7) that is used, e.g., if a statistical analysis is used, the descriptive features can be the mean and the variance.

On the other hand, the color features analysis process (7) of stage b1) can vary according to the color space that is selected. Now, the color feature analysis process (7) can be selected from the group consisting of the principal component analysis (PCA) process, a statistical analysis of each color channel of the color image (2) using statistical parameters, the histogram of each color channel of the color image, the invariant moments of the color image, the energy, entropy, percentiles, and combinations of the foregoing.

In a particular example, for any embodiment of the method of this disclosure, in sub-stage b1) the color feature analysis process (7) includes an analysis of principal component process (PCA). One of the technical effects of using the Principal Component Analysis (PCA) process is that it allows generalized image color features to be obtained, i.e., unlike analyzing color by channel independently, the PCA process generates color data describing the relationship between color channels in the image.

In the principal component analysis (PCA) process, a principal component is obtained for each channel of the color space in which the color image is located (2). In the case of color images in RGB or HSV space, three main components are obtained for each image. These main components are ordered from highest to lowest according to the magnitude of their eigenvalue. Each principal component is a descriptive feature of each channel of the color space in which the color image is located (2). Now, and as mentioned above, the descriptive features obtained from the color feature process (7), e.g., from the main component analysis (PCA) process, only a certain number of main components can be selected and the rest discarded. In a particular example, the color feature process (7) is a principal component analysis (PCA) process, from which only the first two principal components are selected. One of the technical effects of using only two first principal components is that, on average, they contain more than 99.8% of the color variance, which means that the third principal component contains mostly noise or information of little relevance. Using only two main components allows the number of color data to be reduced, which in turn reduces system processing time.

On the other hand, the color features analysis process (7) can be a statistical analysis of each color channel of the color image (2) by means of statistical parameters. These statistical parameters can be selected from the group consisting of mean, variance, skewness, kurtosis, median, mode, percentiles, entropy, and other statistical parameters known to a person of ordinary skill in the art, and combinations thereof. The statistical parameters correspond to the descriptive features and, as mentioned before, these descriptive features can be selected. In a particular example, the color features analysis process (7) is a statistical analysis of each color channel of the color image (2) by means of statistical parameters, and the statistical parameters or descriptive features that are obtained are only the mean and variance. The technical effect of selecting the mean and variance is that they do not require additional processing time to use them as descriptors of each color channel, since these two statistical parameters are also used for the principal components analysis calculation.

In a preferred embodiment, the color features analysis process (7) can be made up of a statistical analysis of each color channel of the color image (2) by means of statistical parameters and an analysis of principal component process (PCA). If necessary, the process of color feature analysis (7) can include a color space conversion stage, said stage is necessary when the image acquisition device (4) does not obtain the color image (2) that uses the color feature analysis process (7). For example, the computing unit (1) may be configured to convert the color image (2) from RGB space to HSV space.

In a particular example and that applies to any embodiment of the method of this disclosure, the color features analysis process (7) can be composed of three stages: 1) the conversion of the image to color (2) of the space of RGB color to HSV space, 2) analysis of each color channel of the color image (2) using statistical parameters, and 3) analysis of the overall color of the color image (2) using a process of principal component analysis.

The first stage of the color features analysis process (7), of this particular example, consists of generating a converted color image (2), in which the original color image (2) is transformed into the color space RGB to HSV color space. The equations to transform an image from RGB to HSV can be the following

$$H = \begin{cases} 0°, & \Delta = 0 \\ 60° \times \left(\dfrac{G' - B'}{\Delta} \bmod 6\right), & C_{max} = R' \\ 60° \times \left(\dfrac{B' - R'}{\Delta} + 2\right), & C_{max} = G'' \\ 60° \times \left(\dfrac{R' - G'}{\Delta} + 4\right), & C_{max} = B' \end{cases}$$

$$S = \begin{cases} 0, & C_{max} = 0 \\ \dfrac{\Delta}{C_{max}}, & C_{max} \neq 0 \end{cases}$$

and

$$V = C_{max}$$

where

$$R' = R/255,$$

$$G' = G/255,$$

$$B' = B/255,$$

$$C_{max} = \max(R', G', B'),$$

$$C_{min} = \min(R', G', B'),$$

$$\Delta = C_{max} - C_{min},$$

and *R, G, B, H, S* and *V* are the intensities of the red, green, blue, hue, saturation and value channels, respectively.

The second stage of the color features analysis process (7), of this particular example, consists of calculating some statistical parameters, which can be the mean and the variance of each color channel in the color image (2) and in the converted color image (2), which can be given by

$$\mu_C = \frac{1}{MN} \sum_{m=1}^{M} \sum_{n=1}^{N} S(m, n, C)$$

and

$$\sigma_C^2 = \frac{1}{MN} \sum_{m=1}^{M} \sum_{n=1}^{N} (S(m, n, C) - \mu_C)^2$$

where C is the color channel, $\mu_C$ is the mean of the color channel C, $\sigma_C^2$ is the variance of the color channel *C, S(m, n, C)* is the color image (2) or the converted color image (2), *M* are the number of rows in the image to color (2) or converted color image (2) and N are the number of columns in the converted color image (2) or color image (2). Since each color space produces three statistical color parameters, using both RGB and HSV space, the second stage, in this particular example, produces twelve color data in total.

Finally, the third stage, of this particular example, consists of finding the first two main components of the color image (2) in the RGB and HSV space through a process of principal component analysis. In this process, the two orthonormal vectors in the color space that represent the directions with the highest variance in the color image (2) are found. Because color spaces have three dimensions, each principal component is made up of three real numbers in the range of [-1, +1]. Therefore, using RGB and HSV spaces, the third stage produces twelve additional color data. In total, the computing unit (1) by concatenating the color data of the second and third stage obtains color data (36) with twenty-four elements.

On the other hand, the texture data (37) is obtained by processing the color image (2) with the texture features analysis process (8). The process of texture feature analysis (8) extracts features describing the surface of the object in the color image (2), which in this case is at least one rock, regardless of the color in the image. Said features of the color image (2) will be represented in the texture data (37).

The process of texture feature analysis (8) normally uses grayscale images to obtain the texture data (37), although methods that can obtain the texture data (37) directly from the color image (two). Due to the foregoing, the texture features analysis processes (8) can have a stage of converting the color image (2) to gray scales.

The process of texture feature analysis (8) can be selected from the group consisting of a multi-resolution process of texture analysis (e.g., a wavelet decomposition process, local binary patterns (LBP), the Haralick features, cosine transform, Gabor transform, frequency analysis, fractal models, random variable model, AM-FM transform, Empirical Mode Decomposition (EMD), and combinations thereof).

In any of the embodiments of the disclosed method including sub-stage b2), the process of texture feature analysis (8) may include a multi-resolution process of texture analysis. In another particular example and for any disclosure method, the process of texture feature analysis (8) is based on a wavelet decomposition process that takes a two-coefficient Haar-type wavelet as input. In this type of analysis, a bank of high-pass and low-pass filters is used to filter the color image (2) and eliminate low and high frequencies, respectively. The filtered color image (2) is then decimated by a factor of two to reduce the resolution by half and remove redundant information. The filters used to decompose the color image (2) are chosen from a certain family of wavelets and depend on the application.

In the first level of wavelet decomposition, four alternating color images (2) are generated for each color image

(2): the approximation $W_\varphi(j, m, n)$ containing the low frequencies, the horizontal detail $W_\psi^H(j, m, n)$ containing the horizontally oriented high frequencies, the detail vertical $W_\psi^V(j, m, n)$ containing vertically oriented high frequencies and diagonal detail $W_\psi^D(j, m, n)$ containing diagonally oriented high frequencies, where $j$ is the level of the multi-resolution analysis. This process corresponds to the first level of two-dimensional wavelet analysis, and can be applied to the approximation image $M_\varphi(j, m, n)$ an arbitrary number of times recursively to obtain a multi-resolution analysis.

In other words, the multi-resolution process of texture analysis can perform several levels of wavelet decomposition, and then produces three alternate monochrome images for each level that is performed.

Each texture feature process (8) can obtain at least one descriptor feature that is represented in the texture data (37). In order to facilitate the processing of the texture data (37) to later obtain the first matrix (5), only some of the descriptive features that are obtained from the texture feature process (8) can be selected. For example, the descriptor features may be energy, entropy, mean, variance, skewness, kurtosis, median, percentiles, co-occurrence matrix, or other descriptors known to a person skilled in the art.

In a particular example, the texture features analysis process (8) is made up of two stages: a first stage that, with a multi-resolution analysis process, obtains a sub-image to decompose it and then, in a second stage, a process of calculation of mathematical parameters from the images obtained in the first stage.

The first stage consists of applying a multi-resolution analysis process to the sub-image to decompose it into several alternate images with desirable properties, at different resolution levels. In this disclosure, the type of multi-resolution analysis applied is wavelet decomposition. This type of analysis decomposes each sub-image into 4 alternate images for each level that is applied, where the first levels contain information related to the low frequencies in the image and the lower levels contain information related to the high frequencies. In this disclosure, 3 levels of decomposition are used, thus producing 12 alternate representations of the sub-image.

The second stage consists of applying to each alternate representation of the sub-image a process of calculating mathematical parameters that allow each alternate sub-image to be reduced to a small group of real numbers. In this disclosure the energy of the alternate sub-images was used, which is given by

$$E_{i,j} = \frac{1}{MN} \sum_{m=1}^{M} \sum_{n=1}^{N} |S_{i,j}(m,n)|^2,$$

In particular, $E_{i,j}$ is the energy of the alternate sub-image $S_{i,j}(m, n)$, $i$ and $j$ are the level and number of the alternate sub-image, respectively, and M and $N$ are the number of rows and columns of the alternate sub-image, respectively. In this way, 12 texture data are generated, which are then concatenated to generate a vector of texture features per color image (2) that are represented as texture data (37).

Moreover, in the second stage it is also possible to use other methods for calculating the mathematical parameters, such as skewness, kurtosis, mean, mode, entropy or other methods and combinations thereof. These methods allow an arbitrary number of texture data to be generated for each sub-image.

Once the color data (36) and the texture data (37) are obtained, the computing unit (1) processes them by means of the first classification method (6), with which the first matrix (5).

In this case, the first classification method (6) can be selected from the group consisting of support vector machines, neural networks, random forests, K-nearest neighbors, or other classification methods known to a person of ordinary skill in the art and combinations thereof. In a particular example, in sub-stage b3), the first classification method (6) is at least a neural network.

*Obtaining the Second Matrix (9)*

In stage c) of the method, the second matrix (9) can be obtained by processing the hyperspectral image (3) in the computing unit (1). From the hyperspectral image (3) it is possible to obtain the plurality of spectral curves (11) in the computing unit (1), each spectral curve (11) represents a pixel of the hyperspectral image (3).

For example, the plurality of spectral curves (11) can be organized in a matrix of spectral curves of dimensions of $M_V$ rows and $N_\lambda$ columns, where $M_V$ is the number of spectral curves (11) and $N_\lambda$ is the number of spectral bands. This matrix of spectral curves can be taken as input data for the second classification method (10), where vector support machines can be used, among others, to find the mineral class of each spectral curve.

In any of the embodiments of the method disclosed herein that has stages c1) and c2), the method may include, between stage c1) and stage c2), a stage of generating a second plurality of spectral curves (39) by selecting at least a spectral band of each spectral curve of the plurality of spectral curves (11) by means of a spectral band selection process (38). In this case, the second plurality of spectral curves (39) can be organized in a matrix of spectral curves of dimensions of $M_V$ rows and $N_{\lambda,s}$ columns, where $M_V$ is the number of spectral curves and $N_{\lambda,s}$ is the number of selected spectral bands. In this particular example, the second plurality of spectral curves (39) is the input data of the second classification method (10), where the second classification method (1) finds the mineral class of each spectral curve of the second plurality of spectral curves (39).

In one embodiment of the disclosure, the spectral band selection process (38) occurs only once in the training of the rock classification method according to its minerals, and in this case the image acquisition device (4) is configured to obtaining the second plurality of spectral curves (39). In other words, and in this particular example, the image acquisition device (4) is configured to only obtain spectral curves that are within the spectral bands that are selected. The technical effect of the above is that the transmission of information from the image acquisition device (4) to the computing unit (1) is faster, i.e., instead of sending hundreds of spectral bands for each hyperspectral image (3) to the computing unit (1), it is more efficient to send a reduced group of spectral bands.

In this particular case, in stage c2) the second classification method (10) takes as input the second plurality of spectral curves (39).

The spectral band selection process (38) receives the spectral curves (11) and selects at least one spectral band in order to generate the second pluralities of spectral curves (39). For example, the spectral band selection process 38 may select a range of spectral bands between 200nm and 14000nm. In another particular example, the spectral band selection process (38) can select a range of spectral bands between 400nm and 2500nm. Alternatively, the spectral band selection process 38 may band select a range of specific spectral bands between 620nm and 650nm. On the other hand, the spectral band selection process (38) can select sets of specific spectral bands such as 520nm and 680nm.

Once the spectral curves (11) of the hyperspectral image (3) or the second plurality of spectral curves (39) have been obtained, the computing unit (1) processes them by means of the second classification method (10), hence, obtaining the second matrix (9).

The second classification method (10) can be selected from the group consisting of support vector machines, neural networks, random forests, K-nearest neighbors, or other classification methods known to a person of ordinary skill in the art, and combinations thereof. In a particular example of the method disclosed herein, in sub-stage c2) the second classification method (10) can be a support vector machine.

*Obtaining Rock Classification Data*

After obtaining the first matrix (5) and the second matrix (9), these are taken as input data for the third classification method (12), which has the classification data of rocks as output data (41). Rock classification data (41) determines whether the rock is suitable (mineral) or waste (gangue).

In a particular example, the rock classification data (41) is binary, i.e., the rock classification data (41) takes the value of 1 when at least one rock is suitable or takes the value of 0 when the at least one rock is considered waste.

The third classification method (12) can be selected from the group consisting of support vector machines, neural networks, random forests, K-nearest neighbors, or other classification methods known to a person of ordinary skill in the art, and combinations thereof. In a particular example of the method disclosed herein, in sub-stage d) the third classification method (12) can be a support vector machine.

As indicated above, the first classification method (6), the second classification method (10) and the third classification method (12) can be classification processes based on supervised machine learning. Therefore, the first classification method (6), the second classification method (10) and the third classification method (12) can be trained with a set of rock images, whose minerals are known. With the aforesaid, the first classification method (6), the second classification method (10) and the third classification method (12) are configured to carry out any embodiment of the method described in this disclosure.

Alternatively, any of the classification methods of the method disclosed herein, e.g., the first classification method (6), the second classification method (10) and the third classification method (12), may contain classification processes based on unsupervised machine learning. In these cases, said classification methods can be based on clustering processes such as K-means, hierarchical clustering or hope-maximization algorithms; dimensionality reduction such as principal component analysis (PCA), t-SNE, or UMAP; deep learning such as generative neural networks (GANs), autoencoders, self-organizing maps (SOMs); or other methods or combinations of these known to a person of ordinary skill in the art.

Alternatively, any of the classification methods of the method disclosed herein, e.g., the first classification method (6), the second classification method (10) and the third classification method (12), may contain classification processes based on semi-supervised machine learning. These methods have the advantage that they allow the use of labeled and unlabeled data to solve classification problems. In these cases, these classification methods can be based on generative model processes, such as Gaussian mixture models, hidden Markov models, Boltzmann machines, autoencoders or generative neural networks (GANs); low-density separation models, such as transductive support vector machines; Laplacian regularization; or other methods or combinations of these known to a person of ordinary skill in the art.

*Image Pre-processing*

On the other hand, any of the embodiments of the method of this disclosure can perform a pre-processing method on the images obtained by the computing unit (1), to improve the features of the images (e.g., brightness, image size, number of image pixels, among others).

For example, the color image (2) can be pre-processed before the stage b), the above to improve the effectiveness of any of the embodiments of the method of this disclosure, e.g., with the elimination of segments in the color image (2) that do not contain valuable information for rock classification. The objective of the pre-processing method is that the color features analysis process (7) is performed on a color image (2) with improved features.

The color image pre-processing method (2) can be selected from the group consisting of image segmentation, noise reduction filter, low pass filter, high pass filter, band pass filter, statistical order filter, adaptive filters, transformations logarithmic, gamma transforms, histogram equalization, histogram matching, or other digital image pre-processing methods known to one of ordinary skill in the art, and combinations of the foregoing.

Optionally, in the color image pre-processing method (2), image segmentation can be performed. Image segmentation allows the processing carried out by the computing unit (1) to be carried out on regions of the color image (2) where the object is actually found, which in this case is at least one rock. This is achieved by discarding regions that correspond to the background of the color image (2) or to other elements that do not correspond to the objective, which can generate noise in the color data (36) and in the color data (37).

There are several image segmentation methods that can be selected from the group consisting of region-based convolutional neural networks (R-CNN), segmentation methods based on binary threshold, simple thresholds, adaptive thresholds, the method Otsu algorithms, high-pass filters, color segmentation, K-means segmentation, hope-maximization algorithm, Markov random fields, diffusion fill, U-Nets, and combinations thereof.

For example, the segmentation method may be a binary threshold-based segmentation method. This method is very effective when you have a constant-colored background in the image. For example, when you have a mineral conveyor belt. A technical advantage of the method is that it requires low processing time, due to its simplicity, which is desirable in real-time classification systems.

Referring to FIG. 3, in any of the methods disclosed herein that include stage b), said stage b) may include before sub-stage b1) a sub-stage b11) for obtaining fragmented images validated by means of a color image pre-processing method (2) which includes the following steps:

 b111) obtaining a segmented image (21) from the color image (2) by means of a segmentation method (29), where the segmented image (21) includes a first segment (22) and a second segment (23), where the first segment (22) corresponds to the at least one rock;
 b112) obtaining fragmented images (24) of the first segment (22) corresponding to at least one rock; and
 b113) obtaining validated fragmented images (40) from the fragmented images (24).

Particularly and in any embodiment of the method of this disclosure that includes the segmentation method (29), the at least one-color data (36) and the at least one texture data (37) are obtained by processing the validated fragmented images (40). In this particular case and for any embodiment of the disclosure method, the segmentation method (29) may be a segmentation method based on binary threshold.

In the same way, the first matrix (5) is obtained by processing the at least one-color data (36) and the at least one texture data (37) obtained from the validated fragmented images (40) by means of the first method classification (6). In this case, the first matrix (5) is a matrix with dimensions $M_V \times N_M$, where $M_V$ represents the number of validated fragmented images (40) and $N_M$ represents the number of minerals to be detected.

In an embodiment of the disclosure, the first matrix (5) can reduce the data that compose it, e.g., by obtaining statistical parameters of said first matrix (5), from said statistical parameters the mean, variance, skewness, kurtosis, mode, entropy or others known to a person moderately versed in the matter and combinations thereof, can be selected. For example, the computing unit (1) can process the data of the first matrix (5) to only select some percentiles of each column of the first matrix (5). For example, the computing unit (1) can select the 25th, 50th and 75th percentiles of each column $N_M$ of the first matrix (5). Using percentiles has the advantage that it allows you to reduce the number of color and texture data per $M_V \times N_M$ data image to just $M_P \times N_M$, where $M_P$ is the number of percentiles and the idea is that $M_P << M_V$. One problem if trying to classify a rock directly with the first matrix is that the number of sub-images $M_V$ varies depending on the size of the rock. Therefore, a classification algorithm with a constant number of inputs, such as neural networks or support vector machines, could not be used. Using percentiles solves this problem, since a fixed number of percentiles are always used.

Similarly, the hyperspectral image (3) can be pre-processed before stage c) to improve the features of said image, the foregoing to improve the effectiveness of any of the embodiments of the method of this disclosure. The objective of applying the pre-processing method is that the plurality of spectral curves (11) is obtained from images with better features from the hyperspectral image (3).

On the other hand, the hyperspectral image pre-processing method (3) can be selected from the group consisting of image segmentation, noise reduction filter, low pass filter, high pass filter, band pass filter, other image pre-processing methods digital known by a person moderately versed in the matter and combinations of the previous ones. For example, in any of the embodiments of the method disclosed herein, in the hyperspectral image pre-processing method (3), image segmentation can be performed.

Image segmentation allows the processing carried out by the computing unit (1) to be carried out on regions of the hyperspectral image (3) where the object is actually found, which in this case is at least one rock. This allowed obtaining the spectral curves (11) of the pixels that contain the object, in this case, the at least one rock.

There are several image segmentation methods that can be selected from the group consisting of region-based convolutional neural networks (R-CNN), segmentation methods based on binary threshold, simple thresholds, adaptive thresholds, the method of Otsu, high-pass filters, color segmentation, spectral band segmentation, K-means segmentation, hope-maximization algorithm, Markov random fields, diffusion fill, U-Nets and combinations thereof. For example, in any of the embodiments of the method disclosed herein, the hyperspectral image pre-processing segmentation method (3) may be a binary threshold-based segmentation method.

Referring to FIG. 4, in any of the embodiments of the method disclosed herein that include stages c) and c1), stage c) may include before sub-stage c1) a sub-stage c11) hyperspectral image pre-processing (3) comprising the following steps:

c111) obtaining a segmented image (25) by means of a segmentation method (30) from the hyperspectral image (3), where the segmented image (25) includes a first segment (26) and a second segment (27), where the first segment (26) corresponds to the at least one rock; and

c112) obtaining validated spectral curves (28) of the first segment (26) corresponding to at least one rock.

Particularly and in any embodiment of the method of this disclosure that includes the segmentation method (30), the second matrix (9) is obtained by processing the validated spectral curves (28) obtained from the first segment (26) by means of the second classification method (10). In this case, the second matrix (9) can be a matrix with dimensions $M_V \times N_M$, where $M_V$ represents the number of validated spectral curves (28) and $N_M$ represents the number of minerals to be detected.

In an embodiment of the disclosure, the second matrix (9) can reduce the data that compose it, e.g., obtaining statistical parameters of said second matrix (9), from said statistical parameters the mean, variance, skewness, kurtosis, mode, entropy or others known to a person moderately versed in the matter and combinations thereof, can be selected. For example, the computing unit (1) can select the 25th, 50th and 75th percentiles of each column $N_M$ of the second matrix (9).

On the other hand, and one embodiment of the disclosure, the method of this disclosure can perform a color image pre-processing method (2) and a hyperspectral image pre-processing method (3) to obtain the first matrix (5) and the second matrix (9), respectively. In one embodiment of the disclosure, the color image pre-processing method (2) and the hyperspectral image pre-processing method (3) are the same. In another embodiment of the disclosure, the pre-processing method of the color image (2) is different from the pre-processing method of the hyperspectral image (3).

In particular, the pre-processing method of this disclosure can be a segmentation of the color image (2) and of the hyperspectral image (3). As mentioned above, image segmentation allows the processes that are carried out on the color image (2) and the hyperspectral image (3) to use less processing time because each image selects only the region where the rock is found.

Referring to FIG. 4, in any of the embodiments of the method described in this disclosure in which stages b1) and c1) are executed, the method may include before sub-stages b1) and c1) a sub-stage b11) of obtaining validated fragmented images (40) by means of a pre-processing method from the color image (2) and a sub-stage c11) of obtaining validated spectral curves (28) by means of a pre-processing method from the hyperspectral image (3), where the sub-stage b11) may include the following steps:

b111) obtaining a segmented image (21) from the color image (2) by means of a segmentation method (29), where the segmented image (21) includes a first segment (22) and a second segment (23), where the first segment (22) corresponds to the at least one rock;
b112) obtaining fragmented images (24) of the first segment (22) corresponding to at least one rock; and
b113) obtaining validated fragmented images (40) from the fragmented images (24).

On the other hand, and continuing with FIG 4, where sub-stage c11) comprises the following steps:

c111) obtain a segmented image (25) by means of a segmentation method (30) from the hyperspectral image (3), where the segmented image (25) includes a first segment (26) and a second segment (27), where the first segment (26) corresponds to the at least one rock; and
c112) obtaining validated spectral curves (28) of the first segment (26) corresponding to at least one rock.

In this particular case and for any embodiment of the disclosure method in which the color image (2) and the hyperspectral image (3) are segmented, the segmentation method (29) and the segmentation method (30) can be a segmentation method based on binary threshold.

On the other hand, in this particular example and for any embodiment of the disclosure method in which the color image (2) and the hyperspectral image (3) are segmented, the first matrix (5) is obtained by processing the at least one-color data (36) and the at least one texture data (37) obtained from the validated fragmented images (40) by means of the first classification method (6) and the second matrix (9) is obtained by processing the validated spectral curves (28) obtained from the first segment (26) by means of the second classification method (10).

*Neural Networks*

As mentioned above, the first classification method (6), the second classification method (10) and the third classification method (12) can be selected from several classification methods that can be supervised learning algorithms. Now, and in one embodiment of the disclosure, in stage b) the first classification method (6) can be at least one neural network. In the same way and in an embodiment of the disclosure, the second classification method (10) can be at least one neural network. On the other hand, the third classification method (12) can be at least one neural network.

For any embodiment of the method of this disclosure, the neural network of any of the classification methods (6,10,12) can be composed of at least one input layer, at least one hidden layer and at least one output layer, each comprising a plurality of neurons, and which together are trained to produce neural network output from neural network input and neural network training. In a particular example, the first classification method (6) which is a neural network, has as input data of the neural network, the color data (36) and the texture data (37) and the output data is the first matrix (5).

In the training of the neural network, it is configured by means of hyperparameters, these hyperparameters modify the performance of the neural network. The hyperparameters for the neural network can be selected from the group consisting of the type of activation function of the layers, number of epochs, batch size, number of hidden layers, number of neurons in the layer, learning rate, moment factor, other hyperparameters known to a person of ordinary skill, and combinations thereof.

For example, in stage b) the first classification method (6) can be a neural network having an input layer, a first hidden layer, a second hidden layer, and an output layer. Particularly, the first hidden layer and second hidden layer include a rectified linear activation function (ReLU), and where, the output layer includes a logistic activation function. The use of the ReLU activation function in the hidden layers of the neural network has the following advantages: (i) it requires less processing time than other common activation functions such as the logistic function and the hyperbolic tangent, (ii) less risk of suffering from the problem of vanishing gradients, which results in faster learning. The use of the logistic function in the output layer of the neural network allows mapping the results of the hidden layers to a real value between 0 and 1, which can be interpreted as the probability or certainty that the neural network assigns to the predicted class.

In another example, in stage b) the first classification method (6) can be a neural network that can have an input layer, a first hidden layer, a second hidden layer, and an output layer. Particularly, the first hidden layer and second hidden layer include a rectified linear activation function (ReLU), and where, the output layer includes a logistic activation function. Additionally, the neural network can have a regularization method, said regularization method is dilution. One of the technical effects of using dilution is that it prevents the effect of overfitting on the neural network. This happens because the dilution removes a group of neurons from the neural network with a certain probability in each training iteration. Therefore, the neural network learns not to depend exclusively on any particular neuron, but to depend on all neurons and their nonlinear combinations.

In another example, in stage b) the first classification method (6) may be a neural network having an input layer, a first hidden layer, a second hidden layer, and an output layer.

Particularly, the first hidden layer and second hidden layer include a rectified linear activation function (ReLU), and where, the output layer includes a logistic activation function. Additionally, the neural network can have a regularization method, said regularization method is dilution. On the other hand, the number of neurons in the hidden layer can be up to two hundred neurons. One of the technical effects of specifically using two hundred neurons is that it allows for greater classification accuracy compared to using a smaller or larger number of neurons per hidden layer.

Optionally, the first classification method (6) can be a set of artificial neural networks that operate in parallel, which take as input the color data (36) and the texture data (37) and have as output the first matrix (5). In this particular example, you have $N_M$ neural networks, where each one specializes in finding a single type of mineral. For example, the first is used to classify the mineral $\{M_1\}$ from the mineral set $\{M_2, M_3, ..., M_N\}$, the second to classify the mineral $\{M_2\}$ from the mineral set, $\{M_1, M_3, ..., M_N\}$ and so on until the mineral $\{M_N\}$ from the mineral set $\{M_1, M_2, ..., M_{N-1}\}$ is classified.

Each neural network generates at least one real value in the range of [0,1] for the color image (2) or one real value in the range of [0,1] for each validated fragmented image (40), in the case that the color image (2) is perform the pre-processing of FIG. 3. By concatenating the value of the color image (2) or the values of all the validated fragmented images (40) of a mineral type, a color and texture classification matrix is generated with dimensions $M_V \times N_{DCT}$, where $M_V$ represents the number of images validated fragmented data (40) and $N_{DCT}$ represents the number of data obtained by the neural network.

In this example, $N_{DCT} = 1$ can be used, thereby generating a color and texture classification matrix of degree one of $M_V \times 1$ for each neural network. Finally, the matrices produced by each neural network are concatenated to produce the first matrix (5), with dimensions $M_V \times N_M$, where $M_V$ represents the number of validated fragmented images (40) and $N_M$ represents the number of minerals. In a particular example, the number of neural networks is four and the target minerals are white ore, gray ore, green gangue, and purple gangue. White ore is a type of high-grade rock composed mostly of quartz and calcite. Gray ore is a type of high-grade rock composed mostly of andesite with a high density of quartz veinlets. Green gangue is a low-grade rock type composed of fresh andesite or debris flow. Purple gangue is a type of low-grade rock composed mostly of andesite altered by different geological processes. Mineralization in the minerals of interest is strongly associated with the presence of sulfides in quartz, which in turn is found mostly in white ore and gray ore rock types.

In the event that the method of this disclosure has a plurality of neural networks and that the number of neural networks is taken based on the number of target minerals, each neural network outputs a classification matrix according to the target mineral. The classification matrices are processed to obtain the first matrix (5).

In a particular example and referring to FIG. 6, in any of the embodiments of the method described in this disclosure in which stage b3 is executed), the first classification method (6) can be composed of a first neural network, a second neural network, a third neural network and a fourth neural network. In this case, stage b3) comprises the following steps:

b31) obtaining a first color and texture classification matrix (17) by means of the first neural network that takes as input the at least one-color data (36) and the at least one texture data (37);

b32) obtaining a second color and texture classification matrix (18) by means of the second neural network that takes as input the at least one-color data (36) and the at least one texture data (37);

b33) obtaining a third color and texture classification matrix (19) by means of the third neural network that takes as input the at least one-color data (36) and the at least one texture data (37);

b34) obtaining a fourth color and texture classification matrix (20) by means of the fourth neural network that takes as input the at least one-color data (36) and the at least one texture data (37); and

b35) obtaining the first matrix (5) through a process of classification matrix operations (31) that takes as input the first color and texture classification matrix (17), the second color and texture classification matrix (18), the third color and texture classification matrix (19) and the fourth color and texture classification matrix (20).

Particularly, the first color and texture classification matrix (17) groups data corresponding to a first target mineral, and the second color and texture classification matrix (18) groups data that corresponds to a second target mineral. Similarly, the third color and texture classification matrix (19) groups data corresponding to a third target mineral, and the fourth color and texture classification matrix (20) groups data that corresponds to a fourth target mineral. Specifically, the use of neural networks as the first classification method (6) allows for a higher classification performance compared to other classification methods. In the particular case in which the performance of the use of neural networks is compared with the use of SVM, an average F1 value is obtained that is 6.6% higher. Moreover, in the particular case in which the performance of the use of neural networks is compared with the use of convolutional neural networks, an average value of F1 is obtained that is higher by 13.3%.

In one embodiment of the disclosure, the classification matrix operation process (31) may be a concatenation operation.

*Support Vector Machine*

Other classification methods that can be used as the first classification method (6), second classification method (10) or third classification method (2) are Support Vector Machines (SVM).

In general, support vector machines allow the classification of a group of data, for example in the case of the second classification method (10), the data that it takes as input data may correspond to the spectral curves (11). In this case, the second classification method (10), which is a vector support machine, obtains a second matrix (9), said second matrix (9) is a distribution matrix of the mineral present in at least one rock, according to the spectral features of the hyperspectral image (3) of said rock.

The training of support vector machines can be done through a process of configuring some hyperparameters that modify the performance of the support vector machine. The hyperparameters for support vector machines can be selected from the group made up of Kernels (e.g., linear kernel, nonlinear kernel, among others), the C hyperparameter that controls the penalty for each incorrect classification, the regularization Gamma hyperparameter, and other hyperparameters known to a person of ordinary skill in the art and combinations thereof.

In one embodiment of the disclosure and for any embodiment of this disclosure, the support vector machine uses a linear kernel. The advantage of using a linear kernel is that it allows the models to be trained quickly without compromising the accuracy of the system.

On the other hand, the first classification method (6), the second classification method (10) and the third classification method (2) can be configured to consist of one or more support vector machines. For example, the first classification method (6), the second classification method (10) and the third classification method (2) can be configured to have a support vector machine for each mineral to be identified in the at least one rock.

In one embodiment of the disclosure and for any embodiment of the method of this disclosure, the first classification method (6), the second classification method (10), and the third classification method (2) are made up of a plurality of support vector machines with a decision tree configuration, where each support vector machine is configured to determine whether the at least one rock has a target mineral.

In one embodiment of the disclosure and for any embodiment of the method of this disclosure, the second classification method (10) is a set of support vector machines (SVMs) that operate a decision tree configuration. In this embodiment, there are $N_{M-1}$ SVMs, where each one specializes in a single type of mineral.

The first SVM is used to classify each spectral curve (11) among the mineral $\{M_1\}$ in the mineral set $\{M_2, M_3, ..., M_N\}$, producing at least one real number close to the range [0,1], but which may also be outside the range. By concatenating the values of all the spectral curves (11) of the first type of mineral, an intermediate spectral curve classification matrix is generated with dimensions $M_V \times N_{DCT}$, where $M_V$ represents the number of valid spectral curves from the segmented image and $N_{DCT}$ represents the number of data obtained by the SVM

A binary threshold $T_{SVM,1}$ obtained experimentally is then applied to this intermediate matrix to binarize the intermediate classification matrix of spectral curves and, finally, the first mineral matrix with dimensions $M_{V,M1} \times N_{HSI}$ and a first waste matrix with dimensions $M_{V,W1} \times N_{DHSI}$, where $M_{V,M1}$ is the number of spectral curves (11) classified as mineral $M_1$, $M_{V,W1}$ is the number of spectral curves (11) classified as waste and $N_{DHSI}$ is the number of data obtained by the SVM. The second SVM is used to classify each curve between the mineral $\{M_2\}$ of the mineral set $\{M_3, M_4, ..., M_N\}$ and takes as input the first waste matrix, producing a second mineral matrix and a second waste matrix. This process is repeated until reaching the last SVM, in which the last waste matrix is considered to belong to the mineral $M_N$. If any of the mineral matrices show that the target mineral is present, that mineral matrices become the second matrix (9). On the other hand, if more than one matrix of minerals shows the presence of mineral, these matrices are concatenated.

In one embodiment of the disclosure and for any embodiment of the method of this disclosure, the second classification method (10) is a set of support vector machines (SVMs) operating in parallel. In this embodiment, there are $N_{M-1}$ SVMs, where each one specializes in a single type of mineral.

In one embodiment of the disclosure, the SVM is used to classify each spectral curve (11) according to a target mineral, producing at least one real number close to the range [0,1], but which may also be outside said range. By concatenating the values produced by the SVM of all the spectral curves (11), a spectral curve classification matrix is generated with dimensions $M_V \times N_{DCT}$, where $M_V$ represents the number of valid spectral curves from the segmented image and $N_{DCT}$ represents the number of data obtained by the SVM This process is repeated with the $N_{M-1}$ SVMs and then these matrices are concatenated to produce the second matrix (9).

In a particular example, the second classification method (10) uses three support vector machines operating in a decision tree configuration, and the target minerals are white ore, porous ore, and gray ore.

Referring to FIG. 7, in any of the embodiments of the method described in this disclosure in which stage c2 is executed) the second classification method (10) can be composed of three support vector machines and a decision tree, where stage c2) comprises the following steps:

c21) obtaining a first matrix of minerals (14) and a first matrix of non-mineralized rock (32) by means of a first vector support machine that takes as input the plurality of spectral curves (11);
c22) obtaining a second mineral classification matrix (15) and a second non-mineralized rock matrix (33) by means of a second vector support machine that takes as input the first matrix of non-mineralized rock (32);
c23) obtaining a third mineral classification matrix (16) and a third non-mineralized rock matrix (34) by means of a third vector support machine that takes as input the second matrix of non-mineralized rock (33);
c24) obtaining the second matrix (9) through a decision tree process (35) from the first mineral classification matrix (14), the second mineral classification matrix (15), the third classification matrix of minerals (16) and the third matrix of non-mineralized rock (34).

Particularly, the first mineral matrix 14 groups data corresponding to a first target mineral and the second mineral classification matrix 15 groups data corresponding to a second target mineral. On the other hand, the third mineral classification matrix (16) groups data corresponding to a third target mineral and the third matrix (34) groups data corresponding to minerals other than the first, second and third target minerals.

Particularly, a specific order can be used to rank the target minerals for the second grading method (10), since it is desirable to rank the easiest to rank minerals first, i.e., those that were best ranked under the evaluation metric of AUC (Area Under the Curve) *Combination of classification method.* One of the technical effects of first classifying the minerals that were best classified under the AUC evaluation metric is that doing so reduces the classification error of the plurality of spectral curves. In a particular example, the first target mineral is white ore, the second target mineral is porous ore, and the third target mineral is gray ore.

In a particular example, the second classification method (10) uses three support vector machines operating in a parallel configuration, and the target minerals are white ore, porous ore, and gray ore.

Referring to FIG. 8, in any of the embodiments of the method described in this disclosure in which stage c2) is executed, the second classification method (10) can be composed of three vector support machines, where stage c2) comprises the following steps:

c21) obtaining a first matrix of minerals (14) by means of a first vector support machine that takes as input the plurality of spectral curves (11);
c22) obtaining a second mineral classification matrix (15) by means of a second vector support machine that takes as input the plurality of spectral curves (11);
c23) obtaining a third mineral classification matrix (16) by means of a third vector support machine that takes as input the plurality of spectral curves (11);
c35) obtaining the first matrix (5) through a process of classification matrix operations (31) that takes as input the first matrix of minerals (14), the second matrix of mineral classification (15), and the third matrix of classification of minerals (16).

In this case, when the configuration is in parallel, the first mineral matrix (14) groups data corresponding to a first target mineral, and the second mineral classification matrix (15) groups data corresponding to a second target mineral. Similarly, the third mineral classification matrix (16) groups data corresponding to a third target mineral.

In an embodiment of the invention, the first classification method (6), the second classification method (10) and the third classification method (2) are different classification methods. This is because for each type of data you may have a classification method that is the best fit for your classification.

In an embodiment of the disclosure, the method of this disclosure in sub-stage b3) the first classification method (6) is composed of a first neural network, a second neural network, a third neural network and a fourth neural network, said stage b3) comprises the following steps:

b31) obtaining a first color and texture classification matrix (17) by means of the first neural network that takes as input the at least one-color data (36) and the at least one texture data (37);
b32) obtaining a second color and texture classification matrix (18) by means of the second neural network that takes as input the at least one-color data (36) and the at least one texture data (37);
b33) obtaining a third color and texture classification matrix (19) by means of the third neural network that takes as input the at least one-color data (36) and the at least one texture data (37);
b34) obtaining a fourth color and texture classification matrix (20) by means of the fourth neural network that takes as input the at least one-color data (36) and the at least one texture data (37); and

b35) obtaining the first matrix (5) through a process of classification matrix operations (31) that takes as input the first color and texture classification matrix (17), the second color and texture classification matrix (18), the third color and texture classification matrix (19) and the fourth color and texture classification matrix (20).

On the other hand, and continuing in this particular embodiment, in sub-stage c2) the second classification method (10) is made up of three support vector machines in parallel, where stage c2) comprises the following steps:

c21) obtaining a first matrix of minerals (14) by means of a first vector support machine that takes as input the plurality of spectral curves (11);
c22) obtaining a second mineral classification matrix (15) by means of a second vector support machine that takes as input the plurality of spectral curves (11);
c23) obtaining a third mineral classification matrix (16) by means of a third vector support machine that takes as input the plurality of spectral curves (11);
c35) obtaining the second matrix (9) through a process of classification matrix operations (31) that takes as input the first matrix of minerals (14), the second matrix of mineral classification (15), and the third matrix of classification of minerals (16).

Finally, in this particular embodiment, the third classification method (12) is a support vector machine that takes as input data the first matrix (5) obtained in stage b35) and the second matrix (9) obtained in stage c24) and obtains as output data the rock classification data (41). One of the technical effects of the previous embodiment in the method of this disclosure is that it allows to obtain a higher precision than the use of the classification only by color and texture or the classification only by spectral curves. In particular, the use of the two classification methods at the same time can increase the classification accuracy by up to 11.9% compared to the use of classification using only color and texture and up to 7.6% compared to the use of classification using only spectral curves.

In an embodiment of the disclosure, the matrix operation process of (31) may be a concatenation operation.

On the other hand, in the above embodiment, image pre-processing can be used for the color image (2) and for the hyperspectral image (3) illustrated in FIG. 5. The above means that the color data (36) and the texture data (37) received as input data by the first classification method (6) are obtained from the validated fragmented images (40) and the data from input of the second classification method (10) corresponds to the validated spectral curves (28). With the foregoing, it is possible to reduce the processing time per image, because only the regions of the image that contain part of at least one rock are processed.

The method of this disclosure can be carried out in any rock classification system that can carry out the technical features of the method that were explained above. Now, the present disclosure also relates to a rock classification system, in which the method of this disclosure can be carried out.

*Rock Classification System According to Their Minerals*

The rock classification system according to its minerals may be arranged in an ore sorter, particularly in the classification area of said mineral classification machines.

Referring to FIG. 2, in one embodiment of the disclosure, the rock classification system according to its minerals comprises:

- a computing unit (1) configured to connect to at least one image acquisition device (4); where, the compute unit (1) is configured to:

  - receiving a color image (2) and a hyperspectral image (3) of at least one rock from at least one image acquisition device (4);
  - obtaining a first matrix (5) by processing the color image (2) by means of a first classification method (6), where the first matrix (5) is obtained as follows:

    - obtaining at least one-color data (36) by processing the color image (2) by means of a color feature analysis process (7);
    - obtaining at least one texture data (37) by processing the color image (2) by means of a texture features analysis process (8);
    - obtaining the first matrix (5) by processing the at least one-color data (36) and the at least one texture data (37) by means of the first classification method (6);
      where the first matrix (5) is a distribution matrix of the mineral present in at least one rock according to the color and texture of the color image (2) of said rock;

- obtaining a second matrix (9) by processing the image in the hyperspectral image (3) by means of a second classification method (10);
  where the compute unit (1) is configured to obtain the second matrix (9) as follows:

  - obtaining a plurality of spectral curves (11) by processing the hyperspectral image (3) by means of a spectral curve selection process (38); and
  - obtaining the second matrix (9) by processing the spectral curves (11) by means of the second classification method (10);
    where the second matrix (9) is a distribution matrix of the mineral present in at least one rock according to the spectral features of the hyperspectral image (3) of said rock; and

- obtaining rock classification data (41) by processing the first matrix (5) and the second matrix (9) by means of a third classification method (12).

Particularly, with the system of this disclosure, the rock classification data (41) are obtained, which indicate whether the at least one rock is suitable or is a waste. The rock classification data (41) is obtained by the computing unit (1).

In the system of this disclosure, the computing unit (1) is a device that allows processing the data coming from some external element, e.g., the image acquisition device (4). The computing unit (1) analyzes the data sent by the external element and carries out actions such as the generation of a control signal and/or the generation of data, e.g., rock classification data (41), among other possible actions you can take.

The computing unit (1) can be selected from the group comprised of: microcontrollers (e.g., PSOC 4BLE), microprocessors, DSCs (Digital Signal Controller), FPGAs (Field Programmable Gate Matrix).), CPLDs (Complex Programmable Logic Device), ASICs (Application Specific Integrated Circuit), SoCs (System on Chip), PSoCs (Programmable System on Chip), computers, servers, tablets, cell phones, smart phones, signal generators and computing units, processing units or processing modules known to a person moderately versed in the matter and combinations thereof. The computing unit (11) can be or include a processing unit programmed to execute the method of the present invention. In a particular example, the computing unit (11) is a microcontroller.

On the other hand, the computing unit (1) can include a communications module or communications circuit with one or more connection ports configured to access a communications network, e.g., a wired network, a wireless network and combinations of the same. Examples of communication networks can be Internet networks, VPN networks, LANs, WANs, other equivalent and similar communication networks known to a person of moderate skill in the art, and combinations thereof.

In the examples of wired communications modules, they can have a wired connection port that allows communication with external devices through a communications bus, which is selected among others, from the group made up of I2C (from the acronym for IIC Inter-Integrated Circuit), CAN (for Controller Area Network), Ethernet, SPI (for Serial Peripheral Interface), SCI (for Serial Communication Interface), QSPI (for Quad Serial Peripheral Interface), 1-Wire, D2B (Domestic Digital Bus), Profibus, and others known to a person of ordinary skill in the art, and combinations thereof.

Examples of wireless communication modules use a wireless communication technology that is selected from the group consisting of Bluetooth, WiFi, Radio Frequency RFID (for the acronym Radio Frequency Identification), UWB (for the acronym Ultra-Wideband), GPRS, Konnex or KNX, DMX (Digital MultipleX), WiMax and equivalent wireless communication technologies that are known to a person of ordinary skill in the art and combinations thereof.

In any mode of the system of this disclosure, the computing unit (1) can be connected to a memory module, where the memory module can be configured to store the first matrix (5), the second matrix (9) and rock classification data (41), among other possible data that can be collected.

In the present invention, memory module or memory register will be understood as a hardware element that includes, but is not limited to, RAM memories (cache memory, SRAM, DRAM, DDR), ROM memory (Flash, Cache, hard disks, SSD, EPROM, EEPROM, removable ROMs (e.g., SD (miniSD, microSD, etc.), MMC (MultiMedia Card), Compact Flash, SMC (Smart Media Card), SDC (Secure Digital Card), MS (Memory Stick), among others)), CD-ROM, Digital Versatile Disc (DVD) or other optical storage, magnetic cassettes, magnetic tapes, storage or any other medium that can be used to store information and which can be accessed by a compute unit, processing unit, or processing module. Instructions, data structures, computer program modules are generally incorporated in memory modules. Some examples of data structure are: a text sheet or a spreadsheet, or a database.

On the other hand, the image acquisition device (4) is an electronic or electromechanical device that can include a matrix of optical sensors that capture electromagnetic radiation in a limited range of wavelengths to produce one or more digital images. In this case, the image acquisition device (4) is configured to obtain a color image (2) and a hyperspectral image (3)

In its most basic form, the image acquisition devices (4) can be made up of at least one optical sensor, a shutter, a communications module or communications circuit, and a processing unit.

The optical sensor can be an electronic device that allows electromagnetic radiation waves to be converted into current signals. The two most widely used types of image sensors are charge-coupled device (CCD) or active pixel sensors. Active pixel sensors in turn can be complementary metal oxide semiconductor (CMOS), N-type metal oxide semiconductor (NMOS), and Live MOS. There are also hybrid optical sensors, such as scientific complementary metal-oxide semiconductor (sCMOS) types.

The shutter can be an electronic or electromechanical device used to control the amount of electromagnetic radiation that strikes the surface of the optical sensor.

The image acquisition device (4) may include a communications module that sends the digital image(s) from the image acquisition device (4) to the computing unit (1), where the communication protocol used to transfer the images can be USB 3.0, Gigabit Ethernet, Camera Link or others.

The image acquisition device (4) may include a processing unit that may be configured to control the exposure time of the image acquisition device (4), error correction, pre-processing and compression of the digital image(s) and control of the communications module.

Optionally, the image acquisition device (4) can have other components, such as optical lenses, mechanical stabilizers, prisms, mirrors, optical filters, display devices or other sensor matrices.

For any of the embodiments of the system of this disclosure, the image acquisition device (4) can have an image sensor and a spectral image sensor, i.e., the image acquisition device (4) is capable of obtaining a color image (2) and a hyperspectral image (3). In a particular example, the image acquisition device (4) can have a color camera and a hyperspectral camera integrated in a single body and both cameras share the same processing unit.

Optionally and for any embodiment of the system of this disclosure, the rock classification system according to its minerals can include a first image acquisition device (4) and a second image acquisition device (13). In this case, each image acquisition device (4, 13) can capture a color image (2) and a hyperspectral image (3) or each image acquisition device (4) is configured to obtain only the color image (2) or only the hyperspectral image (3), i.e., the first image acquisition device (4) can be configured only to obtain the color image (2). In particular, the first image acquisition device (4) can be configured to obtain the color image (2) and the second image acquisition device (13) can be configured to obtain the hyperspectral image (3).

Referring to FIG. 8 and for any embodiment of the system of this disclosure, the first image acquisition device (4) is a color camera and the second image acquisition device (13) is a hyperspectral camera.

For example, the hyperspectral camera may be selected from the group consisting of visible spectrum hyperspectral or multispectral imaging cameras, near infrared hyperspectral or multispectral imaging cameras, shortwave infrared hyperspectral or multispectral imaging cameras, infrared hyperspectral or multispectral imaging cameras, longwave, ultraviolet hyperspectral or multispectral imaging cameras, line-scanning hyperspectral imaging cameras, and cameras configured to capture signals outside the visible spectrum and/or within the visible spectrum that are known to a person of ordinary skill in the art, and combinations thereof.

On the other hand, the first image acquisition device (4) can be a camera that is selected from the group that includes compact cameras, APS (Advanced Photo System) cameras, SLR reflex cameras (Single Lens Reflex), digital cameras, TLR (Twin Lens Reflex) cameras, scanners, similar or equivalent image acquisition devices known to a person of ordinary skill in the art, and combinations thereof.

Optionally and for any embodiment of the system of this disclosure, the rock classification system according to its minerals can comprise a light source that can be configured to connect with the computing unit (1) or with the processing unit of the acquisition device of images (4). The light source is configured to emit electromagnetic radiation (light) at corresponding wavelengths.

On the other hand, in order to classify minerals, ore sorting machines have different mechanical separation mechanisms. This type of machines can be of the belt type or the chute type. In both cases, the rocks separate while in motion. By the time the rocks are separated, they are usually suspended in mid-air, either in free fall or beginning to fall. In order to separate them, what is usually done is to divert their course so that they end up in a corresponding container.

Referring to FIG. 9, in one embodiment of the disclosure and for any embodiment of the system of this disclosure, the rock classification system according to its minerals also comprises a separator mechanism (42) connected to the computing unit (1).

The separating mechanism (42) can be configured to separate rocks according to the rock classification data (41) from a control signal sent to it by the computing unit (1). In this case, the computing unit (1) generates the control signal from the rock classification data (41).

Separator mechanism 42 may be selected from the group consisting of pressurized air jets, pressurized water jets, suction nozzles, mechanical paddles, or other separator mechanisms known to a person of ordinary skill in the art. In a particular example and referring to FIG. 9, the separator mechanism (42) are pressurized air jets. This type of separation mechanism (42) has the advantage that they are the fastest and most precise actuators with a response time of up to 2 ms. Each ejector hole can measure a few millimeters and they are designed for pressures of up to 10 bar. In addition to this, they have the advantage of carrying out a separation without contact with the rocks, avoiding wear on the contact material and the need for frequent component changes.

**Examples**

**Example 1**

A method was proposed to classify rocks according to their minerals, which was executed in the computing unit (1), which was a 2014 MacBook Pro, with a 2.2 GHz Quad-Core Intel Core i7 processor, 16 GB 1600 MHz DDR3 memory and a card. Intel Iris Pro 1536MB graphics. This example of the method allows to classify a type of rock.

In order to obtain the color image (2), an image acquisition device (4) was used, which was a Sony DSC-HX90V camera. The color image (2) was in the RGB color space. On the other hand, to obtain the hyperspectral image (3), a second image acquisition device (13) was used, which was a Specim IQ camera.

In this particular example, a pre-processing method was applied to the color image (2) and the hyperspectral image (3) in the computing unit (1), which corresponded to the segmentation method based on binary threshold. With the processing, the computing unit (1) obtained a segmented image (21) of the color image (2) and a segmented image (25) of the hyperspectral image (3). In the case of the segmented image (21), it was divided and the pixels that belong to the rock were selected, the images obtained from the division of the segmented image were called fragmented images (24), said fragmented images (24) they had a size of 64x64 pixels. These fragmented images (24) are multiplied point by point with the color image (2) to, thus, obtain validated fragmented images (40) that correspond to the fragmented images where at least 90% of the pixels of the fragmented image belong to the rock.

On the other hand, from the segmented image (25) validated spectral curves (28) were obtained, said validated spectral curves (28) were the input data of the second classification method (10).

The validated fragmented images (40) were the input data of the color features analysis process (7) and the texture features analysis process (8), in order to obtain the color data (36) and the data of texture (37).

The color features analysis process (7) was made up of three stages, a first stage conversion of the validated fragmented images (40) from the RGB color space to the HSV space. A second stage, in which an analysis of each color channel of the validated fractionated images (40) is performed using statistical parameters. Finally, and in the third stage, an analysis of the general color of the validated fragmented images (40) is carried out using a process of principal component analysis.

According to the color analysis using statistical parameters, for each channel of the validated fragmented images (40) in the RGB and HSV color space, the mean and variance were calculated. Therefore, twelve color data were obtained. On the other hand, from the main component analysis process, for each channel of the validated fragmented images (40) in the RGB and HSV color space, the first two main components were extracted. Thus, twelve additional color data are obtained. Then, the computing unit (1) concatenates the color data obtained by the color analysis using statistical parameters and the color data obtained with the first two principal components. Therefore, the color data (36) was obtained, which has 24 elements.

The texture features analysis process (8) was made up of two stages: a first stage, in which a multi-resolution analysis process is carried out and a second stage, in which a mathematical parameter calculation process is carried out from of the images obtained the multi-resolution analysis. In particular, the multi-resolution analysis process is a wavelet decomposition Haar type of two coefficients, particularly in this example, three levels of decomposition were used. Due to the above, twelve alternate representations of the validated fragmented images were obtained (40).

In the last stage, a calculation of mathematical parameters for the alternate images was performed, in particular, the energy of each alternate image was calculated. Due to the foregoing, the texture data (37) was obtained, which has twelve elements.

The color data (36) and the texture data (37) are the input data of the first classification method (6), in this case, said first classification method (6) are parallel neural networks, each neural network has an input layer, two hidden layers, and an output layer. These neural networks have the following architecture: the input layer has 36 inputs that correspond to the 36 elements that contain the color data (36) and the texture data (37). On the other hand, the first hidden layer has 200 neurons with the ReLU activation function and the second hidden layer also has 200 neurons with the ReLU activation function. Finally, the output layer has a neuron with the logistic activation function.

The second classification method (10) was a set of support vector machines (SVMs) operating in a parallel configuration.

From the first classification method (6) and the second classification method (10), the first matrix (5) and the second matrix (9) were obtained, which served as input data for the third classification method (12). The third classification method (12) was a support vector machine, which yielded the rock classification data (41).

With the foregoing, it was possible to correctly identify rocks with an equivalent silver content greater than 93 ppm with high performance. The 93-ppm threshold determines whether the gold and silver value of a rock is greater than the costs involved in processing it. In order to evaluate the algorithm, 100 iterations were made, alternating the rocks of the burrowing and testing set randomly, and an average $F_1$ value of 98.9% was obtained when using the color, texture and hyperspectral features between 620 and 640 nm. Other variations of the algorithm that obtained high performance were those for color, texture, and hyperspectral features between 630 and 650 nm (average $F_1$ value of 97.9%), those for color, texture, and hyperspectral features between 420 and 440 nm (average $F_1$ value). average $F_1$ of 96.0%) and those of color, texture and hyperspectral features between 400 and 1000 nm (average $F_1$ value of 93.1%). These results are superior to using only color and texture features (87.0%) or only spectral features (91.3%).

**Example 2**

The system to carry out the method of example 1 could be composed of a computing unit (1) which is an industrial computer. The system could use two image acquisition devices, the first image acquisition device (4) could be an industrial color camera with Ethernet connection and the second image acquisition device (13) could be an industrial hyperspectral camera with Ethernet connection.

**Example 3**

The system of example 2 could be provided with a mineral classification machine in its classification zone, the mineral classification machine could have a conveyor belt and have a separation mechanism (42) made up of air jets. The separation mechanism (42) could be connected to the computing unit (1) and configured to receive a control signal from said computing unit (1) for its activation.
With this system, tests could be carried out where up to 50 tons of rock per hour are classified from a gold and silver mine and it would be expected to have a performance of up to 98.9%, evaluated under the metric of the $F_1$ value.

**Example 4**

A method was proposed to classify rocks according to their minerals from example 1, to make a comparison between different embodiments, specifically related to the first classification method. In a particular example, different types of minerals were used to test the proposed mineral classification method. The following table shows the types of minerals used:

Table 1. Mineral types used to test the proposed mineral classification method

| Rock class | Acronym | Composition |
|---|---|---|
| White Ore | WO | Quartz, calcite, sulfides |
| Gray Ore | GO | Quartz breccia, calcite, andesite, sulfides |
| Green Gangue | GG | Andesite |
| Purple Gangue | PG | Altered andesite, clays |

Rocks that contain high content of gold and silver are white ore and gray ore. White ore is rock found primarily in the vein and is composed mostly of quartz and calcite and sulfides. Gray ore is a rock found at the edges of the vein and is composed of quartz, calcite, sulfide and andesite breccias in different proportions. The green gangue is a rock that surrounds the vein, and is composed mostly of pure andesite, which has little gold and silver content. Finally, the purple gangue is a rock that also surrounds the vein but has been altered by some geological process. This type of rock is composed of andesite, clay and other alterations that can give it a slightly purple, reddish or white color.
First, stage b) of the method was executed using different neural networks with different configurations as the first classification method (6). The performance of the neural networks used in the first classification method (6) is evaluated when dropout regularization is used and when no regularization is used. The results are shown in the following table:

Table 2. Comparison between the performance obtained with the use of neural networks with dropout regularization and without dilution. Performance is compared under the accuracy metric.

| Sorter | Without dilution | With dilution |
|---|---|---|
| WO vs. others | 96.94% | 97.67% |
| GO vs. others | 84.57% | 85.37% |

(continued)

| Sorter | Without dilution | With dilution |
|---|---|---|
| GG vs. others | 93.03% | 94.71% |
| PG vs. others | 87.83% | 89.10% |

In table 2, it can be seen that the use of dilution allows to obtain a better performance for the four neural networks. In this case, all neural networks were evaluated at the sub-image level and under the accuracy metric.

On the other hand, stage b) of the method was also executed using neural networks with different numbers of neurons as the first classification method (6). The performance of the neural networks used in the first classification method (6) when the hidden layers have 50, 100, 200 or 400 neurons was evaluated. The results are shown in the following table:

Table 3. Comparison between the performance obtained when using neural networks with hidden layers of 50, 100, 200 and 400 neurons. Performance is compared under the accuracy metric.

| Sorter | 50 neurons | 100 neurons | 200 neurons | 400 neurons |
|---|---|---|---|---|
| WO vs. others | 96.31% | 96.96% | 97.38% | 97.07% |
| GO vs. others | 83.24% | 84.04% | 84.60% | 84.28% |
| GG vs. others | 95.20% | 95.92% | 95.61% | 95.66% |
| PG vs. others | 84.85% | 85.32% | 86.61% | 85.32% |

In table 3, it can be seen that for all the classifiers except for the "GG vs. others," performance is higher when 200 neurons are used in each hidden layer. For the case of the GG, the performance is slightly higher when 100 neurons are used, but it was decided to use 200 neurons to have a standardized architecture. In this case, all neural networks were evaluated at the sub-image level and under the accuracy metric.

On the other hand, stage b) of the method was executed using a principal component analysis (PCA) process as a color feature analysis process (7). The performance of the first three principal components of the principal component analysis (PCA) process was evaluated for different color spaces. The results are shown in the following tables:

Table 4. Percentage variance in the data for the first three principal components independently and for the set of the first two principal components for the RGB color space.

| Main components | Average | Standard deviation | Minimum | Maximum |
|---|---|---|---|---|
| RGB PC 1 | 99.69% | 0.24% | 94.54% | 100.00% |
| RGB PC2 | 0.22% | 0.21% | 0.00% | 5.37% |
| RGB PC3 | 0.07% | 0.05% | 0.00% | 0.39% |
| RGBPC {1,2} | 99.93% | 0.05% | 99.61% | 100.00% |

Table 5. Percent variance in the data for the first three principal components independently and for the set of the first two principal components for the HSV color space.

| Main components | Average | Standard deviation | Minimum | Maximum |
|---|---|---|---|---|
| HSV PC 1 | 91.64% | 9.96% | 49.58% | 99.69% |
| HSVPC2 | 8.12% | 9.59% | 0.30% | 48.10% |
| HSV PC3 | 0.24% | 0.69% | 0.00% | 13.95% |
| HSV PC{1,2} | 99.76% | 0.69% | 86.05% | 100.00% |

Tables 4 and 5 show the percentage of the total variance in the RGB and HSV color spaces that each principal component contains. In them, it can be seen that the use of the first two main components is optimal because they contain at least 86.05% of the variance and on average 99.93% and 99.76% for the RGB and HSV color space, respectively. Under these observations, the third principal component could contain mostly noise that does not provide relevant information to the analysis. It should be noted that these data were obtained with the images of the rocks of a specific mine and could be different for other images.

On the other hand, stage b) of the method was executed using different classification methods as the first classification method (6). The performance of the use of neural networks (NN), support vector machines (SVM) and convolutional neural networks (CNN) in the classification of four types of minerals was evaluated using only the first classification method (6). The results are shown in the following table:

Table 6. Comparison of the performance of the use of neural networks (NN), support vector machines (SVM) and convolutional neural networks (CNN) in the classification of four types of minerals using only the first classification method. Performance is evaluated under the $F_1$ value metric.

| Mineral | N.N. | SVM | CNN |
|---|---|---|---|
| WO | 100.00% | 98.40% | 87.60% |
| GO | 94.10% | 61.50% | 75.00% |
| GG | 100.00% | 97.00% | 88.10% |
| PG | 95.70% | 80.00% | 80.00% |

Table 6 compares the performance of using three different classification algorithms as the first mineral classification method, i.e., the method based only on color images. In this table, it is observed that the use of neural networks produces better performance than the use of support vector machines and the use of convolutional neural networks for all classes of minerals. This justifies the fact that neural networks were used as the classification algorithm in the first classification method. In this case, performance was evaluated at the full-image level with rocks classified by a geologist and not chemically analyzed. The evaluation metric used is the $F_1$ value.

**Example 5**

A method was proposed to classify rocks according to their minerals from example 1, to make a comparison between different embodiments, specifically related to the first classification method and the second classification method. The minerals of example 4 were used.

On the other hand, the method was executed applying stage b) only, stage c) only, stage b) and stage c), stage b) and stage c) with ranges of specific spectral bands. The results are shown in the following table:

Table 7. Comparison of performance using only the first classification method (color and texture), only the second classification method (hyperspectral), the combination of the first and second methods using all spectral bands, and other combinations of the first and second methods using a reduced set of spectral bands. The performance was evaluated under the metric value $F_1$.

| Method | Average | Standard deviation | Minimum | Maximum |
|---|---|---|---|---|
| Color and texture only | 86.97% | 8.73% | 66.67% | 100.00% |
| Hyperspectral only | 91.33% | 8.82% | 57.14% | 100.00% |
| Color, texture and hyperspectral | 93.14% | 9.07% | 60.00% | 100.00% |
| Color, texture and 420-440 nm | 95.98% | 7.65% | 75.00% | 100.00% |
| Color, texture and 620-640 nm | 98.88% | 3.73% | 80.00% | 100.00% |
| Color, texture and 630-650 nm | 97.94% | 6.35% | 75.00% | 100.00% |

Table 7 shows mineral classification performance using different combinations of algorithms, including color and texture features only, hyperspectral features only, and combinations of both. In general, the combination of color, texture and hyperspectral features produces better results than these individually. The best performance is obtained by using the combination of color, texture and spectral bands in the range of 620nm to 640nm. This particular method also has the lowest variance in results, proving that it is not only the most accurate, but also the most consistent. In order to carry out these tests, 100 iterations were carried out, in which a training set and a test set were chosen randomly from the total number of rocks. The evaluation metric used to measure performance is the $F_1$ value.

**GLOSSARY**

**Digital Image:** Digital image will be understood in this disclosure as a data arrangement obtained by an image acquisition device containing spatial information about a scene. Each piece of data in a digital image, called a pixel, contains information about the intensity of electromagnetic radiation at a certain point in the scene.

Each pixel can take a finite number of values depending on the number of bits used to quantize the image. Usually, 8 or 16 bits are used to represent each color channel of each pixel in the digital image, which can produce up to 256 or 65536 intensity levels, respectively.

**Color Image (2):** In this disclosure, color image will be understood as a data structure composed of three monochrome digital images, which together provide color information in each pixel of the image. Color images are commonly captured by color image acquisition devices (4), which use matrices of optical sensors that capture electromagnetic radiation in a specific range of wavelengths. In order to reconstruct the image from the optical sensor matrices, color separation mechanisms such as sensors with Bayer filters, Foveon X3 sensors or 3CCD sensors are used.

Usually, color cameras capture the light intensity of red, green, and blue colors, with wavelengths around 665nm, 550nm, and 470nm, respectively. Additionally, many color cameras use a filter to remove wavelengths in the near-infrared spectrum passing through sensor imperfections. It should be noted that there are less common color cameras that capture light at different wavelengths, such as the VNIR-RG, NIR-VNIR-R, NIR-GB and others.

The information of the three colors in a pixel can be interpreted as a coordinate in a three-dimensional color space, which can be RGB, YCbCr, HSV, L*a*b* or others. The most common color space used is RGB.

**Hyperspectral Image (3):** In this disclosure, hyperspectral image will be understood as a data structure composed of a plurality of monochrome images combined in a three-dimensional data cube $I(x, y, \lambda)$, where $x$ and $y$ are spatial coordinates and $\lambda$ is the spectral coordinate. In spectral images, each of the monochrome images $I(x, y, \lambda_n)$ contains the spatial information of a scene in a specific band of the electromagnetic spectrum. Similarly, each pixel in a hyperspectral image can be interpreted as the spectral signature of a certain material in the scene.

Hyperspectral imaging (3) is typically not limited to capturing images in the visible spectrum, but can also capture images in the ultraviolet (UV), very near infrared (VNIR), near infrared (NIR), shortwave infrared (SWIR), medium wave infrared (MWIR), and long wave infrared (LWIR).

Hyperspectral images (3) are commonly captured by hyperspectral imaging devices (4), which use matrices of optical sensors that capture electromagnetic radiation in a specific range of wavelengths. Due to the multiplicity of wavelengths, traditional sensor matrices cannot be used. For this reason, hyperspectral images (3) are usually captured by means of a scanning mechanism, which can be spatial scanning, spectral scanning or spatio-spectral scanning.

**First Matrix (5):** In the present disclosure, the first matrix (5) can be a matrix of data obtained from the first classification method that contains information about the distribution of minerals in the rock. Said matrix is represented by a matrix of $M_V$ rows and $N_M$ columns, where $M_V$ represents the number of validated sub-images obtained from the segmented image and $N_M$ represents the number of minerals that the first classification method has been trained to classify.

In the first matrix (5), each element is a real and continuous number between 0 and 1. The values of each row can be interpreted as the probability that the sub-image corresponding to said row belongs to each of the mineral classes, represented by the columns of the matrix.

**First Classification Method (6):** In the present disclosure, the first classification method corresponds to a mineral classification algorithm that uses a color image to produce a first matrix (5), which can be subsequently processed to estimate what kind of mineral the rock belongs to in said image.

**Color Data (36):** In the present disclosure, a color data is a real, integer or binary number that contains certain type of information related to the color of a digital image. The color data (36) is generated from the color feature analysis process (7), in which mathematical methods are used to analyze the digital image and produce at least one number representative of the color.

**Color Feature Analysis Process (7):** In the present disclosure, the feature analysis process consists of analyzing a color image (2) or a segmented image by means of mathematical methods to generate at least one-color data (36).

It should be noted that the image can be transformed to other color spaces besides the HSV space, such as YCbCr, L*a*b* or others, thus generating an arbitrary number of color features.

**Texture Data (37):** In the present disclosure, a texture data can be a real, integer or binary number that contains certain type of information related to the texture of a digital image.

**Second Matrix (9):** In the present disclosure, the second matrix corresponds to a matrix of data obtained from the second classification method (10) that contains information about the distribution of minerals in the rock. Said matrix can be represented by a matrix of $M_V$ rows and $N_M$ columns, where $M_V$ represents the number of valid spectral curves obtained from a segmented image and $N_M$ represents the number of minerals that the second classification method (10) has been trained to classify.

For example, in the second matrix (9), each element can be a continuous real number that is in the approximate range between 0 and 1, but can sometimes be greater than 1 or less than 0. The values of each row can be interpreted as the classification algorithm's assurance that each spectral curve belongs to each of the mineral classes, i.e., the higher the value of an element in the matrix, the greater the probability that said element belongs to the corresponding mineral class.

**Process of Texture Feature Analysis (8):** In the present disclosure, the process of texture feature analysis (8) consists of analyzing a grayscale image or validated fragmented image (40) in grayscale by means of mathematical methods to generate at least one texture data.

**Second Classification Method (10):** In the present disclosure, the second classification method (10) corresponds to a mineral classification algorithm that uses a plurality of spectral curves (11) obtained from a hyperspectral image (3) to produce a second matrix (9), which can be used by a third classification method (12) to estimate to which mineral class the rock in said image belongs.

**Plurality of Spectral Curves (11):** In the present disclosure, plurality of spectral curves is understood as the set of spectral curves obtained through the spectral curve selection process (38).

A spectral curve represents the variation in the reflectance of a material as a function of the wavelength of light or electromagnetic radiation. Because hyperspectral cameras capture images in a plurality of spectral bands, each pixel in a hyperspectral image (3) can be interpreted as a spectral curve that contains information about the material being analyzed.

**Rock Classification Data (41):** In the present disclosure, the rock classification data (41) is obtained by the third classification method (12) and can have a value of a variable, e.g., a real number, integer or binary, containing certain information to determine whether the rock is mineralized or is considered to be blast rock.

**Segmented Image:** In the present disclosure, a segmented image can be a color image (2) or a hyperspectral image (3) that has been multiplied pixel by pixel with a binary mask. The binary mask in turn can be a binary image, where the pixels that contain an intensity of 1 form a first segment that represents the areas of the image where the rocks are found and the pixels equal to 0 form a second segment that represents the image background.

The binary mask can be produced by simple thresholds, adaptive thresholds, Otsu's method, high-pass filters, K-means segmentation, expectation-maximization algorithm, random Markov fields, diffusion fill, U-Nets, or others.

In a particular example, to find the binary mask, the simple binary threshold method is used, because the background has a significantly darker tone than the rocks. This binary mask is given by

$$M(m, n) = I(m, n) \geq T,$$

where $M$ is the binary mask, $I$ is a grayscale image, $m$ is the vertical pixel coordinate, $n$ is the horizontal pixel coordinate, and $T$ is the binary threshold, which is found experimentally. Once the binary mask is obtained, the segmented image is calculated as follows

$$I_s(m, n, C) = I(m, n, C) * M(m, n),$$

where $I_s$ is the segmented image, $C$ is the channel or spectral band of the image to be segmented, and the operator (*) represents the pixel-by-pixel multiplication of the image.

**First Segment:** In the present disclosure, the first segment may correspond to all pixels in the segmented image that are related to the presence of a rock.

**Second Segment:** In the present disclosure, the second segment may correspond to all pixels in the segmented image that are related to the background of the image. For example, any material or element that appears in the image and that is not related to rocks.

**Fragmented Images:** Fragmented images are small color images obtained from the color image (2) or the hyperspectral image (3) at regular pixel intervals. The number of pixels used to split the color image (2) or the hyperspectral image (3) into fragmented images (24) depends on the spatial resolution of the camera, the distance between the camera and the rock, and the focal length. In order to find the number of pixels needed, you can first define the actual dimensions of the desired region, which can be in meters, millimeters, inches, or other measurements, and then convert the number of distance units to the number of pixels required.

For example, the number of pixels used can be a power of two, because this allows exact down sampling when, e.g., the texture feature extraction process (8) is applied.

**Valid Fragmented Images (40):** Fragmented images can be considered valid if the ratio of pixels in the fragmented images containing a portion of the rock to the total number of pixels in the fragmented image is greater than or equal to a threshold value $T_V$, the which is experimentally defined.

Moreover, the binary threshold used to determine if a fragmented image is valid can be $T_V = 0.9$, i.e., in this example, at least 90% of the pixels in an image must be part of a rock to be considered valid. This binary threshold value can vary in a range between 0% and 100%, but it is recommended that it be a high value (e.g., greater than 50%) to obtain only regions with a significant amount of rock.

**Multi-Resolution Texture Analysis Process:** In the present disclosure, multi-resolution texture analysis may be a sub-stage of the process of texture analysis consisting of transforming or decomposing each grayscale sub-image into one or more alternate sub-images at different resolution levels., which contain information about the texture of the sub-images. Some of the methods used in multi-resolution texture analysis can be wavelet decomposition, local binary patterns (LBP), co-occurrence matrix, Gabor transform, AM-FM transform, by empirical modes (EMD) or other related methods

**Two-Coefficient Haar Wavelet:** The Haar wavelet is a group of rescaled square functions that together form the basis for the decomposition of a signal or image. The filters associated with the two-coefficient Haar wavelet are given by the sequences

$$h_\varphi(n) = \frac{1}{2}\{\sqrt{2}, \sqrt{2}\}$$

and

$$h_\psi(n) = \frac{1}{2}\{\sqrt{2}, -\sqrt{2}\},$$

where $h_\varphi(n)$ is the low pass filter and $h_\psi(n)$ is the high-pass filter. From these two one-dimensional filters, four two-dimensional filters are generated which are used to create the four alternate sub-images of each level. These two-dimensional filters are given by

$$h_{\varphi\varphi}(m, n) = h_\varphi(m)h_\varphi(n) = \frac{1}{2}\begin{bmatrix} 1 & 1 \\ 1 & 1 \end{bmatrix},$$

$$h_{\varphi\psi}(m, n) = h_\varphi(m)h_\psi(n) = \frac{1}{2}\begin{bmatrix} 1 & -1 \\ 1 & -1 \end{bmatrix},$$

$$h_{\psi\varphi}(m, n) = h_\psi(m)h_\varphi(n) = \frac{1}{2}\begin{bmatrix} 1 & 1 \\ -1 & -1 \end{bmatrix}$$

Y

$$h_{\psi\psi}(m, n) = h_\psi(m)h_\psi(n) = \frac{1}{2}\begin{bmatrix} 1 & -1 \\ -1 & 1 \end{bmatrix},$$

where $h_{\varphi\varphi}(m, n)$, $h_{\varphi\psi}(m, n)$, $h_{\psi\varphi}(m, n)$ and $h_{\psi\psi}(m, n)$ are used to generate images $W_\varphi(j, m, n)$, $W_\psi^H(j, m, n)$, $W_\psi^V(j, m, n)$ and $W_\psi^D(j, m, n)$ respectively.

**Principal Component Analysis (PCA) Process:** Principal component analysis is a process used to compute the principal components of a collection or matrix of data. The principal components in turn are a set of orthonormal vectors, whose direction is aligned with the direction of greatest variance in the data collection. The process to find the principal components consists of finding the eigenvectors of the covariance matrix of the data collection and then ordering them from highest to lowest according to the magnitude of their corresponding eigenvalues. Thus, the first principal component is the eigenvector of the covariance matrix with the largest eigenvalue, followed by the second eigenvector with the largest eigenvalue, and so on.

**Artificial Neural Network:** Artificial Neural Networks are classification algorithms that can be used to find an unknown function that maps an input $\vec{x} \in \mathbb{R}^d$ dataset to an output dataset $\vec{y} \in \mathbb{R}^d$. Neural networks are usually composed of mathematical units called "artificial neurons," which are nonlinear functions that use a vector of weights $\vec{w} \in \mathbb{R}^d$ and a bias $b \in \mathbb{R}$ to approximate the unknown function. The output of the neural unit is given by

$$\hat{y} = g(\vec{w}^T \vec{x} + b),$$

where $g(\cdot)$ is an activation function.

Neural networks are made up of layers of artificial neurons that are used to approximate the function of interest. These layers can be: an input layer, one or more hidden layers and an output layer.

In order to find the optimal parameters of a neural network, in the case where it tries to solve a classification problem, the neural network is trained to minimize a cost function, which can be defined by

$$J = -\frac{1}{n} \sum_{i=1}^{n} \sum_{k=1}^{K} y_k^{(i)} \log\left(\hat{y}_k^{(i)}\right) + \left(1 - y_k^{(i)}\right) \log\left(1 - \hat{y}_k^{(i)}\right)$$

where $n$ is the amount of data in the training set, $K$ is the number of classes to classify, $y_k^{(i)}$ is the actual class, and $\hat{y}_k^{(i)}$ is the predicted class. On the other hand, an optimization process to minimize the cost function can be a gradient descent process, which is an optimization process in which the gradient of the cost function of the neural network is calculated and small steps in the direction of the highest gradient until the optimal point is found. The dimension of the steps can influence the training results of the neural network.

**Activation Function:** The activation function is a linear or nonlinear function used to transform the inputs of a neuron to its output. Usually, the activation function is applied to the linear combination of the inputs with the weights of said neurons in the following way:

$$\hat{y} = g(\vec{w}^T \vec{x} + b),$$

where $\vec{x}$ is the input vector to the neuron, $\vec{w}$ are the weights, $b$ is the *bias*, $g(\cdot)$ is the activation function, and $\hat{y}$ is the output of the neuron.

In order for a neural network to learn to approximate nonlinear functions, the activation function must necessarily be nonlinear. Some of the most common activation functions are rectified linear unit (ReLU), logistic function, hyperbolic tangent, unit step, radial basis function, pooling functions, among other similar or equivalent activation functions known to a person of ordinary skill in the art.

For example, in this disclosure, neural networks use the ReLU activation function in their hidden layers and the logistic activation function in the output layer to be able to calculate a number between continuous between 0 and 1.

**Rectified Linear Activation Function (ReLU):** The ReLU activation function is a nonlinear function whose output is defined only by the positive part of the input, i.e.,

$$\text{ReLU}(z) = z^+ = \min(0, z),$$

where

$$z = \vec{w}^T \vec{x} + b.$$

ReLU is the most used activation function in deep neural networks and there are studies that have empirically shown that some neural networks that use this function in their hidden layers manage to converge faster than those that use the logistic or hyperbolic tangent activation function.

**Logistic Activation Function:** The logistic activation function is a nonlinear function whose input is a real number between (-∞, +∞) and output is a real number between (0,1). In the logistic function, the larger the input the output asymptotically approaches 1 and the smaller the output asymptotically approaches 0. The equation of this activation function is given by

$$\sigma(z) = \frac{1}{1 + e^{-z}},$$

where σ is the logistic function and z is the input variable to the logistic function, which in the case of neural networks is given by the linear combination of the weights and the output of the previous layer. The logistic activation function is commonly used in neural networks because its output can be interpreted as the probability that the classification is correct or the certainty that the neural network has in its classification.

**Support Vector Machine:** Support Vector Machines (SVM) are classification or regression algorithms that aim to find the hyperplane that maximizes the distance between two classes (in the case of classification) or that best fits the trend of a group of data (in the case of regression). In the classification case, to find such a hyperplane, the SVM finds the points in the training set that are on the boundary between the two classes. These training points are called the support vectors. The distance between the support vectors and the hyperplane is known as the margin and is given by

$$\gamma = \frac{1}{\|\vec{w}\|},$$

where $\vec{w}$ is the normal vector to the separation plane.

SVMs seek to maximize margin distance. Since the margin is defined as the inverse of the modulus of the vector $\vec{w}$, the margin maximization problem can be redefined as the minimization of the modulus of the vector $\vec{w}$ as follows:

$$\min_{w} \frac{1}{2} \|\vec{w}\|^2$$

subject to boundary conditions

$$y^{(i)}\left(\vec{w}^T \vec{x}^{(i)} + b\right) \geq 1 - \zeta^{(i)},$$

where $y^{(i)}$ is the real class corresponding to the vector $\vec{x}^{(i)}$, $\left(\vec{w}^T \vec{x}^{(i)} + b\right)$ is the prediction of the classifier given the vector $\vec{x}^{(i)}$ and $\zeta^{(i)} = \max\left(0, 1 - y^{(i)}\left(\vec{w}^T \vec{x}^{(i)} + b\right)\right)$

In the regression case, the process produced by the SVM depends only on a small group of samples, since the model does not consider the samples that are outside the margin. In this case, the training is very similar to that of the classification, with the difference that in the optimization problem, the boundary conditions are given by

$$\left|y^{(i)} - (\vec{w}^T \vec{x}^{(i)} + b)\right| \leq \varepsilon,$$

where $\varepsilon$ is a free variable indicating that all predicted points have to be within a distance $\varepsilon$ of the true value.

**First Color and Texture Classification Matrix (17):** In the present disclosure, the first color and texture classification matrix (17) can be a matrix generated by the first classification method (6) that contains information about the probability that each sub-image belongs to the class of mineral $M_1$. In this disclosure, the first color and texture classification matrix (17) can be generated by an artificial neural network that is specifically trained to classify the first target mineral $\{M_1\}$ from the set of minerals $\{M_2, M_3, M_4\}$. For example, the dimensions of the first color and texture classification matrix can be $M_V \times N_{DCT}$, where $M_V$ represents the number of sub-images or valid regions obtained from the segmented image and $N_{DCT}$ represents the number of data obtained by the neural network. If the neural network only generates one data for each valid fragmented image, as may be the case in this disclosure, the first color and texture classification matrix (17) become a vector.

**Second Color and Texture Classification Matrix (18):** In the present disclosure, the second color and texture classification matrix (18) can be a matrix generated by the first classification method (6) that contains information about the probability that the color image (2) or each validated fragmented image (40) belongs to the mineral class $M_2$. In this disclosure, the second color and texture classification matrix (18) can be generated by an artificial neural network that is specifically trained to classify the mineral $\{M_2\}$ from the "mineral set" $\{M_1, M_3, M_4\}$. The dimensions of the second color and texture classification matrix (18) can be $M_V \times N_{DCT}$, where $M_V$ represents the number of sub-images or valid regions obtained from the segmented image and $N_{DCT}$ represents the number of data obtained by the neural network. If the neural network only generates one data point for each valid fragmented image, as may be the case in this disclosure, the second color and texture classification matrix (18) become a vector.

**Third Color and Texture Classification Matrix (19):** In the present disclosure, the third color and texture classification matrix (19) can be a matrix generated by the first classification method (6) that contains information about the probability that the color image (2) or each validated fragmented image (40) belongs to the mineral class $M_3$. In this disclosure, the third color and texture classification matrix (19) can be generated by an artificial neural network that is specifically trained to classify the mineral $\{M_3\}$ from the set of minerals $\{M_1, M_2, M_4\}$. The dimensions of the third color and texture classification matrix can be $M_V \times N_{DCT}$, where $M_V$ represents the number of sub-images or valid regions obtained from the segmented image and $N_{DCT}$ represents the number of data obtained by the neural network. If the neural network only generates data for each valid fragmented image, as may be the case in this disclosure, the third color and texture classification matrix (19) become a vector.

**Fourth Color and Texture Classification Matrix (20):** In the present disclosure, the fourth color and texture classification matrix can be a matrix generated by the first classification method (6) that contains information about the probability that the color image (2) or each validated fragmented image (40) belongs to the mineral class $M_4$. In this disclosure, the fourth color and texture classification matrix (20) can be generated by an artificial neural network that is specifically trained to classify the mineral $\{M_4\}$ from the "mineral set" $\{M_1, M_2, M_3\}$. The dimensions of the fourth color and texture classification matrix can be $M_V \times N_{DCT}$, where $M_V$ represents the number of sub-images or valid regions obtained from the segmented image and $N_{DCT}$ represents the number of data obtained by the neural network. If the neural network only generates one data point for each valid fragmented image, as is the case in this disclosure, the fourth color and texture classification matrix (20) become a vector.

**First Mineral Classification Matrix (14):** In the present disclosure, the first mineral classification matrix (14) can be a matrix generated by the second classification method (10) that contains information about the probability that each spectral curve belongs to the mineral class $M_1$. In this disclosure, the first mineral classification matrix (14) can be generated by a support vector machine that is specifically trained to classify the first target mineral $\{M_1\}$ from an arbitrary set of minerals. For example, from the group $\{M_2\}$, $\{M_3\}$, $\{M_2, M_3\}$, or other combinations of minerals. The dimensions of the first mineral classification matrix can be $M_V \times N_{DHSI}$, where $M_V$ represents the number of valid spectral curves obtained from the segmented image and $N_{DHSI}$ represents the number of data obtained by the SVM. If the SVM only generates one data for each valid spectral curve, as may be the case in this disclosure, the first mineral classification matrix (14) becomes a vector.

**Second Mineral Classification Matrix (15):** In the present disclosure, the second mineral classification matrix (15) can be a matrix generated by the second classification method (X) that contains information about the probability that each spectral curve belongs to the mineral class $M_2$. In this disclosure, the second mineral classification matrix (15) can be generated by a support vector machine that is specifically trained to classify the first target mineral $\{M_2\}$ from an arbitrary set of minerals. For example, from the group $\{M_1\}$, $\{M_3\}$, $\{M_1, M_3\}$, or other combinations of minerals. The dimensions of the second mineral classification matrix can be $M_V \times N_{DHSI}$, where $M_V$ represents the number of valid spectral curves obtained from the segmented image and $N_{DHSI}$ represents the number of data obtained by the SVM. If the SVM only generates one data for each valid spectral curve, as may be the case in this disclosure, the second mineral classification matrix (15) becomes a vector.

**Third Mineral Classification Matrix (16):** In the present disclosure, the third mineral classification matrix (16) can be a matrix generated by the second classification method (X) that contains information about the probability that each spectral curve belongs to the mineral class $M_3$. In this disclosure, the A third mineral classification matrix (16) can be generated by a support vector machine that is specifically trained to classify the first target mineral $\{M_3\}$ from an arbitrary set of minerals. For example, from the group $\{M_1\}$, $\{M_2\}$, $\{M_1, M_2\}$, or other combinations of minerals. The dimensions of the third mineral classification matrix can be $M_V \times N_{DHSI}$, where $M_V$ represents the number of valid spectral curves obtained from the segmented image and $N_{DHSI}$ represents the number of data obtained by the SVM. If the SVM only generates one data for each valid spectral curve, as may be the case in this disclosure, the third mineral classification matrix (16) becomes a vector.

**First Non-Mineralized Rock Matrix (32):** In the present disclosure, the first non-mineralized rock matrix (32) can be an intermediate matrix used in the second classification method (10) that contains information about the spectral curves that they are not classified as a mineral $M_1$.

In this disclosure, the first unmineralized rock matrix (32) can be generated by an SVM that can be specifically trained to classify the mineral $\{M_1\}$ from the "mineral set" $\{M_2, M_3, M_4\}$. By concatenating the values obtained by the first SVM for all the spectral curves of the mineral $M_1$, an intermediate spectral curve classification matrix is generated with dimensions $M_V \times N_{DHSI}$, where $M_V$ represents the number of spectral curves (11) or validated spectral curves (28) and $N_{DHSI}$ represents the number of data obtained by the SVM. An experimentally derived binary threshold can then be applied to $T_{SVM,1}$ this intermediate spectral curve classification matrix to binarize the spectral curve classification matrix. All data below the threshold $T_{SVM,1}$ form the first unmineralized rock matrix (32) with dimensions $M_{V,W1} \times N_{DHSI}$, where $M_{V,W1}$ is the number of spectral curves (11) or validated spectral curves (28) classified as unmineralized rock by the first SVM

**Second Non-Mineralized Rock Matrix (33):** In the present disclosure, the second non-mineralized rock matrix (33) is an intermediate matrix used in the second classification method (10) that contains information about spectral curves that are not classified as mineral $M_1$ ni $M_2$.

In this disclosure, the matrix is generated by an SVM that is specifically trained to classify the mineral $\{M_2\}$ from the mineral set $\{M_3, M_4\}$ from the first matrix of unmineralized rock (32). By concatenating the values obtained by the second SVM for all the spectral curves of the mineral $M_2$, an intermediate spectral curve classification matrix is generated with dimensions $M_{V,W1} \times N_{DHSI}$, where $M_{V,W1}$ is the number of spectral curves (11) or validated spectral curves (28) classified as rock not mineralized by the first SVM and $N_{DHSI}$ represents the number of data obtained by the SVM. An experimentally obtained binary threshold can then be applied to this $T_{SVM,2}$ intermediate spectral curve classification matrix to binarize the spectral curve classification matrix. All data below the threshold $T_{SVM,2}$ form the second unmineralized rock matrix (33) with dimensions $M_{V,W2} \times N_{DHSI}$, where $M_{V,W2}$ is the number of spectral curves (11) or validated spectral curves (28) classified as non-mineralized rock by the second SVM.

**Third Non-Mineralized Rock Matrix (34):** In the present disclosure, the third non-mineralized rock matrix is a matrix produced by the second classification method (10) that contains information about the spectral curves that are not classified as mineral. $M_1$, $M_2$ nor $M_3$.

In this disclosure, the third unmineralized rock matrix (34) can be generated by a third SVM that can be specifically trained to classify ore $\{M_3\}$ ore $\{M_4\}$ from the second unmineralized rock matrix (33). By concatenating the values obtained by the third SVM for all the spectral curves (11) of the mineral $M_3$, an intermediate classification matrix of spectral curves with dimensions is generated $M_{V,W2} \times N_{DHSI}$, where $M_{V,W2}$ is the number of spectral curves (11) or validated spectral curves (28) classified as non-mineralized rock by the second SVM and $N_{DHSI}$ represents the number of data obtained by the SVM. An experimentally derived binary threshold can then be applied to this matrix to binarize the $T_{SVM,3}$ spectral curve classification matrix. All data below the threshold $T_{SVM,3}$ form the third unmineralized rock matrix with dimensions $M_{V,W3} \times N_{DHSI}$, where $M_{V,W3}$ is the number of spectral curves (11) or validated spectral curves (28) classified as unmineralized rock by the third SVM

**Third Classification Method (12):** In the present disclosure, the third classification method consists of processing the first matrix (5) and the second matrix (9) to decide if the rock generally contains mineral or if it is a non-mineralized rock using a support vector machine to estimate the rock class.

The third classification method estimates whether or not the rock contains mineral using an SVM, which is trained to produce a value close to 1 if the rock contains mineral or 0 if the rock is not mineralized.

**Spectral Band Selection Process (38):** The spectral band selection process (38) allows finding the set of spectral bands that maximize the performance of the second classification algorithm (10), producing a second plurality of spectral curves. In order to do this, in the algorithm training stage, several classification algorithms are trained using different combinations of spectral bands and only those with which the highest performance is obtained are kept, be it accuracy, precision, recovery, F1-value, area under the curve or others. It should be noted that the optimal set of spectral bands does not necessarily have to be composed of adjacent bands, but can be any combination within the range of possible bands.

Reducing the number of spectral bands used for mineral classification has three main advantages. The first is that it can reduce the data transmission time from the hyperspectral camera to the computer, because by reducing the bands you are reducing the amount of information that has to be sent. The second is that it can reduce the processing time required for the classification of spectral bands, also because the amount of information that enters the classification algorithms is reduced. Finally, the third is that it can improve the performance of the algorithm compared to the use of all spectral bands, because only the relevant information that is correlated with the presence of mineral in the rock is used.

**Second Plurality of Spectral Curves (39):** are the spectral curves obtained from a set of spectral bands selected by means of a spectral band selection process.

**Spectral Band of Each Spectral Curve of the Plurality of Spectral Curves (11):** In the present disclosure, a spectral band is defined as a range of adjacent wavelengths. Hyperspectral images contain a multiplicity of narrowband filters that are used to capture a spectral range of electromagnetic radiation. In this way, the spectral curves produced by hyperspectral cameras are composed of a series of light intensities that are captured in spectral bands that are usually adjacent.

**Separating Mechanism:** In the present disclosure, separating mechanism is understood as any mechanical process used to separate mineral-bearing rocks from non-mineralized rocks. The separation mechanism can use compressed air, high pressure water jets, paddles or others.

**Color Image Sensor:** Color image sensors are electronic devices made up of a matrix of optical sensors that convert electromagnetic radiation waves, usually in the visible spectrum, into current signals that can be processed to produce digital images. In order to produce color images, sensors are designed to capture light at specific wavelengths. Normally the wavelengths used are those corresponding to the colors red, green and blue, but there are cameras that also capture light in the infrared spectrum, such as the VNIR-RG, NIR-VNIR-R, NIR-G-B and others. Because each sensor can only capture a specific set of wavelengths, specific optical sensor matrices and color separation mechanisms such as Bayer filter sensors, Foveon X3 sensors, or 3CCD sensors are often used.

**Hyperspectral Imaging Sensor:** Spectral imaging sensors are electronic devices composed of a matrix of optical sensors that convert electromagnetic radiation waves, usually in the ultraviolet, visible, very near infrared (VNIR), near infrared (NIR), shortwave infrared (SWIR), medium wave infrared (MNIR), or long wave infrared (LWIR) into current signals that can be processed to produce hyperspectral digital images. For example, to produce hyperspectral images, sensors can be configured to capture light with specific wavelengths in narrow bands. However, due to the multiplicity of wavelengths, traditional sensor matrices cannot be used. Therefore, hyperspectral images are usually captured by a scanning mechanism, which can be spatial scanning, spectral scanning or spatio-spectral scanning.

It should be understood that the present disclosure is not limited to the embodiments described and illustrated, since as will be evident to a person skilled in the art, there are possible variations and modifications that do not depart from the spirit of the disclosure, which is only found defined by the following claims.

In a preferred illustrative embodiment identified as [1], a method of classifying rocks according to their minerals comprises:

a) receiving in a computing unit (1) a color image (2) and a hyperspectral image (3) of at least one rock from at least one image acquisition device (4);

b) obtaining by means of the computing unit (1) a first matrix (5) by processing the color image (2) by means of a first classification method (6), where stage b) comprises the following sub-stages:

b1) obtaining at least one-color data (36) by processing the color image (2) by means of a color feature analysis process (7) in the computing unit (1);

b2) obtaining at least one texture data (37) by processing the color image (2) by means of a texture features analysis process (8) in the computing unit (1); and

b3) obtaining the first matrix (5) by processing the at least one-color data (36) and the at least one texture data (37) by means of the first classification method (6) in the computing unit (1);

where, the first matrix (5) is a distribution matrix of the mineral present in at least one rock according to the color and texture of the color image (2) of said rock

c) obtaining by means of the computing unit (1) a second matrix (9) by processing the hyperspectral image (3) by means of a second classification method (10), where stage c) comprises the following sub-stages:

c1) obtaining a plurality of spectral curves (11) by processing the hyperspectral image (3); and

c2) obtaining the second matrix (9) by processing the plurality of spectral curves (11) by means of the second classification method (10) in the computing unit (1);

where, the second matrix (9) is a distribution matrix of the mineral present in at least one rock according to the spectral features of the hyperspectral image (3) of said rock.

d) obtaining rock classification data by processing the first matrix (5) and the second matrix (9) by means of a third classification method (12) in the computing unit (1).

[2] The method according to [1], where stage b) also includes before sub-stage b1) a sub-stage b11) of obtaining validated fragmented images (40) by means of a pre-processing method from the color image (2) which comprises the following steps:

b111) obtaining a segmented image (21) by means of a segmentation method (29), where the segmented image (21) includes a first segment (22) and a second segment (23), wherein the first segment (22) corresponds to the at least one rock; and
b112) obtaining fragmented images (24) of the first segment (22) corresponding to at least one rock
b111) obtaining validated fragmented images (40) from the fragmented images (24);
wherein, at least one-color data (36) and at least one texture data (36) are obtained by processing the validated fragmented images (40).

[3] The method according to [1] and [2], where stage c) includes before sub-stage c1) a sub-stage c11) of obtaining validated spectral curves (28) by means of a pre-processing method from the hyperspectral image (3) which comprises the following steps:

c111) obtaining a segmented image (25) by means of a segmentation method (30) from the hyperspectral image (3), where the segmented image (25) includes a first segment (26) and a second segment (27), wherein the first segment (26) corresponds to the at least one rock; and
c112) obtaining validated spectral curves (28) of the first segment (26) corresponding to at least one rock;
wherein, the second matrix (9) is obtained by means of the second classification method (10) when processing the validated spectral curves (28).

[4] The method according to [1] to [3], wherein sub-stage b2) the process of texture feature analysis (8) includes a multi-resolution process of texture analysis.

[5] The method according to [4], where the process of texture analysis (8) is a multi-resolution process of texture analysis based on wavelet decomposition using a two-coefficient Haar-type wavelet.

[6] The method according to [1] to [4], wherein sub-stage b1) the color feature analysis process (7) includes a principal component analysis (PCA) process.

[7] The method according to [1] to [4] and [6], wherein sub-stage b3) the first classification method (6) is at least one neural network.

[8] The method according to [7], wherein at least one neural network is a neural network having an input layer, a first hidden layer, a second hidden layer, and an output layer,

wherein, the first hidden layer and second hidden layer include a rectified linear activation function (ReLU), and
wherein, the output layer includes a logistic activation function.

[9] The method according to [1] to [4], [6] and [7], where in sub-stage c2) the second classification method (10) is a support vector machine.

[10] The method according to [1], wherein stage b3) the first classification method (6) is composed of a first neural network, a second neural network, a third neural network and a fourth neural network, wherein the stage b3) comprises the following steps:

b31) obtaining a first color and texture classification matrix (17) by means of the first neural network that takes as input the at least one-color data (36) and the at least one texture data (37);
b32) obtaining a second color and texture classification matrix (18) by means of the second neural network that takes as input the at least one-color data (36) and the at least one texture data (37);
b33) obtaining a third color and texture classification matrix (19) by means of the third neural network that takes as input the at least one-color data (36) and the at least one texture data (37);
b34) obtaining a fourth color and texture classification matrix (20) by means of the fourth neural network that takes as input the at least one-color data (36) and the at least one texture data (37); and
b35) obtaining the first matrix (5) by means of a classification matrix operations process (31) that takes as input the first color and texture classification matrix (17), the second color and texture classification matrix (18), the third color and texture classification matrix (19) and the fourth color and texture classification matrix (20),
wherein the first color and texture classification matrix (17) groups data corresponding to a first target mineral;
wherein the second color and texture classification matrix (18) groups data corresponding to a second target mineral;
wherein, the third color and texture classification matrix (19) groups data corresponding to a third target mineral; and
wherein, the fourth color and texture classification matrix (20) groups data corresponding to a fourth target mineral.

[11] The method according to [1], wherein sub-stage c2) the second classification method (10) is composed of three support vector machines in parallel, wherein stage c2) comprises the following steps:

c21) obtaining a first matrix of minerals (14) by means of a first vector support machine that takes as input the plurality of spectral curves (11);

c22) obtaining a second mineral classification matrix (15) by means of a second vector support machine that takes as input the plurality of spectral curves (11);

c23) obtaining a third mineral classification matrix (16) by means of a third vector support machine that takes as input the plurality of spectral curves (11);

c35) obtaining the first matrix (5) through a process of classification matrix operations (31) that takes as input the first matrix of minerals (14), the second matrix of mineral classification (15), and the third matrix of classification of minerals (16).

wherein the first mineral matrix (14) groups data corresponding to a first target mineral;

wherein, the second mineral classification matrix (15) groups data corresponding to a second target mineral; and

wherein the third mineral classification matrix (16) groups data corresponding to a third target mineral.

[12] The method according to [1], where in sub-stage d) the third classification method (12) is a support vector machine.

In another preferred illustrative embodiment identified as [13], a system for classifying rocks according to their minerals comprises:

- a computing unit (1) configured to connect to at least one image acquisition device (4); where, the compute unit (1) is configured to:

  - receiving a color image (2) and a hyperspectral image (3) of at least one rock from at least one image acquisition device (4);
  - obtaining a first matrix (5) by processing the color image (2) by means of a first classification method (6), wherein the first matrix (5) is obtained as follows:
  - obtaining at least one-color data (36) by processing the color image (2) by means of a color feature analysis process (7);
  - obtaining at least one texture data (37) by processing the color image (2) by means of a texture features analysis process (8);
  - obtaining the first matrix (5) by processing the at least one-color data (36) and the at least one texture data (37) by means of the first classification method (6);
  - where the first matrix (5) is a distribution matrix of the mineral present in at least one rock according to the color and texture of the color image (2) of said rock;
  - obtaining a second matrix (9) by processing the image in the hyperspectral image (3) by means of a second classification method (10);
  - where the compute unit (1) is configured to obtain the second matrix (9) as follows:
  - obtaining a plurality of spectral curves (11) by processing the hyperspectral image (3) by means of a spectral curve selection process (38); and
  - obtaining the second matrix (9) by processing spectral curves (11) by means of the second classification method (10);
  - where the second matrix (9) is a distribution matrix of the mineral present in at least one rock according to the spectral features of the hyperspectral image (3) of said rock; and
  - obtaining rock classification data by processing the first matrix (5) and the second matrix (9) by means of a third classification method (12).

[14] The system according to [13], further comprising a separator mechanism connected to the computing unit (1), said separator mechanism configured to separate rocks according to the rock classification data ore quantity from a signal of control sent by the computing unit (1),

wherein, the computing unit (1) generates the control signal from the rock classification data.

[15] The system according to [13] and [14], wherein the image acquisition device (4) has an image sensor and a spectral image sensor.

[16] The system according to [13] and [14], wherein it includes a first image acquisition device (4) and a second image acquisition device (13),

wherein the first image acquisition device (4) is configured to obtain the color image (2) and the second image acquisition device (13) is configured to obtain the hyperspectral image (240).

[17] The system according to [16], the first image acquisition device (4) is a camera and the second image acquisition device (13) is a hyperspectral camera.

[18] The system according to [17], where the hyperspectral camera is selected from the group consisting of visible spectrum multispectral or hyperspectral imaging cameras, near infrared multispectral or hyperspectral imaging cameras, shortwave infrared multispectral or hyperspectral imaging cameras, long-wave infrared hyperspectral or multispectral imaging cameras, ultraviolet hyperspectral or multispectral imaging cameras, line-scanning hyperspectral imaging cameras, and combinations of these.

[19] The system according to [16], where the first image acquisition device (4) is a camera that is selected from the group that includes compact cameras, APS (Advanced Photo System) cameras, SLR reflex cameras (for Single Lens Reflex), digital cameras, TLR (for Twin Lens Reflex) cameras, scanners and combinations of these.

[20] The system according to [13], further comprising a light source configured to capture the reflectance of the at least one rock in the corresponding light spectrum sections.

## Claims

1. A method of classifying rocks according to their minerals, comprising:

   a) receiving in a computing unit (1) a color image (2) and a hyperspectral image (3) of at least one rock from at least one image acquisition device (4);

   b) obtaining by means of the computing unit (1) a first matrix (5) by processing the color image (2) by means of a first classification method (6), where stage b) comprises the following sub-stages:

   b1) obtaining at least one-color data (36) by processing the color image (2) by means of a color feature analysis process (7) in the computing unit (1);
   b2) obtaining at least one texture data (37) by processing the color image (2) by means of a texture features analysis process (8) in the computing unit (1); and
   b3) obtaining the first matrix (5) by processing the at least one-color data (36) and the at least one texture data (37) by means of the first classification method (6) in the computing unit (1);
   where, the first matrix (5) is a distribution matrix of the mineral present in at least one rock according to the color and texture of the color image (2) of said rock

   c) obtaining by means of the computing unit (1) a second matrix (9) by processing the hyperspectral image (3) by means of a second classification method (10), where stage c) comprises the following sub-stages:

   c1) obtaining a plurality of spectral curves (11) by processing the hyperspectral image (3); and
   c2) obtaining the second matrix (9) by processing the plurality of spectral curves (11) by means of the second classification method (10) in the computing unit (1);
   where, the second matrix (9) is a distribution matrix of the mineral present in at least one rock according to the spectral features of the hyperspectral image (3) of said rock.

   d) obtaining rock classification data by processing the first matrix (5) and the second matrix (9) by means of a third classification method (12) in the computing unit (1).

2. The method according to Claim 1, where stage b) also includes before sub-stage b1) a sub-stage b11) of obtaining validated fragmented images (40) by means of a pre-processing method from the color image (2) which comprises the following steps:

   b111) obtaining a segmented image (21) by means of a segmentation method (29), where the segmented image (21) includes a first segment (22) and a second segment (23), wherein the first segment (22) corresponds to the at least one rock; and
   b112) obtaining fragmented images (24) of the first segment (22) corresponding to at least one rock
   b111) obtaining validated fragmented images (40) from the fragmented images (24);
   wherein, at least one-color data (36) and at least one texture data (36) are obtained by processing the validated fragmented images (40).

3. The method according to Claims 1 and 2, where stage c) includes before sub-stage c1) a sub-stage c11) of obtaining validated spectral curves (28) by means of a pre-processing method from the hyperspectral image (3) which comprises the following steps:

c111) obtaining a segmented image (25) by means of a segmentation method (30) from the hyperspectral image (3), where the segmented image (25) includes a first segment (26) and a second segment (27), wherein the first segment (26) corresponds to the at least one rock; and
c112) obtaining validated spectral curves (28) of the first segment (26) corresponding to at least one rock;
wherein, the second matrix (9) is obtained by means of the second classification method (10) when processing the validated spectral curves (28).

4. The method according to Claims 1 to 3, wherein sub-stage b2) the process of texture feature analysis (8) includes a multi-resolution process of texture analysis.

5. The method according to Claim 4, where the process of texture analysis (8) is a multi-resolution process of texture analysis based on wavelet decomposition using a two-coefficient Haar-type wavelet.

6. The method according to Claims 1 to 4, wherein sub-stage b1) the color feature analysis process (7) includes a principal component analysis (PCA) process.

7. The method according to Claims 1 to 4 and 6, wherein sub-stage b3) the first classification method (6) is at least one neural network.

8. The method according to Claim 7, wherein at least one neural network is a neural network having an input layer, a first hidden layer, a second hidden layer, and an output layer,

wherein, the first hidden layer and second hidden layer include a rectified linear activation function (ReLU), and wherein, the output layer includes a logistic activation function.

9. The method according to Claims 1 to 4, 6 and 7, where in sub-stage c2) the second classification method (10) is a support vector machine.

10. The method according to Claim 1, wherein stage b3) the first classification method (6) is composed of a first neural network, a second neural network, a third neural network and a fourth neural network, wherein the stage b3) comprises the following steps:

b31) obtaining a first color and texture classification matrix (17) by means of the first neural network that takes as input the at least one-color data (36) and the at least one texture data (37);
b32) obtaining a second color and texture classification matrix (18) by means of the second neural network that takes as input the at least one-color data (36) and the at least one texture data (37);
b33) obtaining a third color and texture classification matrix (19) by means of the third neural network that takes as input the at least one-color data (36) and the at least one texture data (37);
b34) obtaining a fourth color and texture classification matrix (20) by means of the fourth neural network that takes as input the at least one-color data (36) and the at least one texture data (37); and
b35) obtaining the first matrix (5) by means of a classification matrix operations process (31) that takes as input the first color and texture classification matrix (17), the second color and texture classification matrix (18), the third color and texture classification matrix (19) and the fourth color and texture classification matrix (20),
wherein the first color and texture classification matrix (17) groups data corresponding to a first target mineral;
wherein the second color and texture classification matrix (18) groups data corresponding to a second target mineral;
wherein, the third color and texture classification matrix (19) groups data corresponding to a third target mineral; and
wherein, the fourth color and texture classification matrix (20) groups data corresponding to a fourth target mineral.

11. The method according to Claim 1, wherein sub-stage c2) the second classification method (10) is composed of three support vector machines in parallel, wherein stage c2) comprises the following steps:

c21) obtaining a first matrix of minerals (14) by means of a first vector support machine that takes as input the plurality of spectral curves (11);

c22) obtaining a second mineral classification matrix (15) by means of a second vector support machine that takes as input the plurality of spectral curves (11);

c23) obtaining a third mineral classification matrix (16) by means of a third vector support machine that takes as input the plurality of spectral curves (11);

c35) obtaining the first matrix (5) through a process of classification matrix operations (31) that takes as input the first matrix of minerals (14), the second matrix of mineral classification (15), and the third matrix of classification of minerals (16).

wherein the first mineral matrix (14) groups data corresponding to a first target mineral;

wherein, the second mineral classification matrix (15) groups data corresponding to a second target mineral; and

wherein the third mineral classification matrix (16) groups data corresponding to a third target mineral.

**12.** The method according to Claim 1, where in sub-stage d) the third classification method (12) is a support vector machine.

**13.** A system for classifying rocks according to their minerals, comprising:

- a computing unit (1) configured to connect to at least one image acquisition device (4); where, the compute unit (1) is configured to:

- receiving a color image (2) and a hyperspectral image (3) of at least one rock from at least one image acquisition device (4);
- obtaining a first matrix (5) by processing the color image (2) by means of a first classification method (6), wherein the first matrix (5) is obtained as follows:
- obtaining at least one-color data (36) by processing the color image (2) by means of a color feature analysis process (7);
- obtaining at least one texture data (37) by processing the color image (2) by means of a texture features analysis process (8);
- obtaining the first matrix (5) by processing the at least one-color data (36) and the at least one texture data (37) by means of the first classification method (6);
where the first matrix (5) is a distribution matrix of the mineral present in at least one rock according to the color and texture of the color image (2) of said rock;
- obtaining a second matrix (9) by processing the image in the hyperspectral image (3) by means of a second classification method (10);
where the compute unit (1) is configured to obtain the second matrix (9) as follows:
- obtaining a plurality of spectral curves (11) by processing the hyperspectral image (3) by means of a spectral curve selection process (38); and
- obtaining the second matrix (9) by processing spectral curves (11) by means of the second classification method (10);
where the second matrix (9) is a distribution matrix of the mineral present in at least one rock according to the spectral features of the hyperspectral image (3) of said rock; and
- obtaining rock classification data by processing the first matrix (5) and the second matrix (9) by means of a third classification method (12).

**14.** The system according to Claim 13, further comprising a separator mechanism connected to the computing unit (1), said separator mechanism configured to separate rocks according to the rock classification data ore quantity from a signal of control sent by the computing unit (1), wherein, the computing unit (1) generates the control signal from the rock classification data.

**15.** The system according to Claims 13 and 14, wherein the image acquisition device (4) has an image sensor and a spectral image sensor.

**16.** The system according to Claims 13 and 14, wherein it includes a first image acquisition device (4) and a second image acquisition device (13), wherein the first image acquisition device (4) is configured to obtain the color image (2) and the second image acquisition device (13) is configured to obtain the hyperspectral image (240).

**17.** The system according to Claim 16, the first image acquisition device (4) is a camera and the second image acquisition device (13) is a hyperspectral camera.

**18.** The system according to Claim 17, where the hyperspectral camera is selected from the group consisting of visible spectrum multispectral or hyperspectral imaging cameras, near infrared multispectral or hyperspectral imaging cameras, shortwave infrared multispectral or hyperspectral imaging cameras, long-wave infrared hyperspectral or multispectral imaging cameras, ultraviolet hyperspectral or multispectral imaging cameras, line-scanning hyperspectral imaging cameras, and combinations of these.

**19.** The system according to Claim 16, where the first image acquisition device (4) is a camera that is selected from the group that includes compact cameras, APS (Advanced Photo System) cameras, SLR reflex cameras (for Single Lens Reflex), digital cameras, TLR (for Twin Lens Reflex) cameras, scanners and combinations of these.

**20.** The system according to Claim 13, further comprising a light source configured to capture the reflectance of the at least one rock in the corresponding light spectrum sections.

Start

receive in a computing unit (1) a color image
(2) and a hyperspectral image (3) of at least
one rock from at least one image acquisition
device (4)

a

obtain by means of the computing unit
(1) a first matrix (5) when processing the
image (2) by means of a first
classification method (6)

b

obtain by means of the computing unit (1) a
second matrix (9) when processing the
hyperspectral image (3) by means of a second
classification method (10)

c

obtain at least one color data (36)
when processing the image (2)
through a color feature analysis
process (7) in the computing unit
(1)

b1

obtain a plurality of
spectral curves (11) by
processing the
hyperspectral image (3)

c1

obtain at least one texture data
(37) by processing the image (2)
through a texture feature analysis
process (8) in the computing unit
(1)

b2

obtaining the second matrix
(9) by processing the
plurality of spectral curves
(11) by means of the second
classification method (10) in
the computing unit (1);

c2

obtain the first matrix (5) by
processing the at least one color
data (36) and the at least one
texture data (37) by means of the
first classification method (6) in
the computing unit (1)

b3

obtain rock classification data by processing the first
matrix (2) and the second matrix (9) by means of a third
classification method (12) in the computing unit (1)

d

End

FIG. 1

FIG. 2

FIG. 3

FIG. 4

FIG. 5

FIG. 6

FIG. 7

FIG. 8

**FIG. 9**

Europäisches
Patentamt

European
Patent Office

Office européen
des brevets

# EUROPEAN SEARCH REPORT

Application Number

EP 22 17 3223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/108838 A1 (PLOTLOGIC PTY LTD [AU]) 10 June 2021 (2021-06-10) | 1-9,12, 13,15-20 | INV. G06V10/52 |
| A | * figure 6 * * paragraphs [0013], [0028] – [0048], [0102], [0140] – [0141] * | 10,11,14 | G06V10/56 G06V10/58 G06V10/80 G06V10/82 |
| A,D | CN 104 463 199 A (UNIV FUZHOU) 25 March 2015 (2015-03-25) * paragraphs [0002], [0007] – [0015] * | 1-20 | |

TECHNICAL FIELDS
SEARCHED      (IPC)

G06V

The present search report has been drawn up for all claims

| Place of search | Date of completion of the search | Examiner |
|---|---|---|
| The Hague | 17 October 2022 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 3223

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2022

| Patent document cited in search report | Publication date | Patent family member(s) | Publication date |
|---|---|---|---|
| WO 2021108838 A1 | 10-06-2021 | AU 2020396050 A1<br>BR 112022010273 A2<br>CA 3159144 A1<br>WO 2021108838 A1 | 07-07-2022<br>09-08-2022<br>10-06-2021<br>10-06-2021 |
| CN 104463199 A | 25-03-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104463199 A
- US 20140297186 A1

- US 8233667 B2

**Non-patent literature cited in the description**

- **NATSUO OKADA et al.** Automated Identification of Mineral Types and Grain Size Using Hyperspectral Imaging and Deep Learning for Mineral Processing. *Minerals,* September 2020, vol. 10 (9), 809